(19) **Europäisches Patentamt / European Patent Office / Office européen des brevets**

(11) **EP 3 672 241 A1**

(12) # EUROPEAN PATENT APPLICATION

(43) Date of publication:
**24.06.2020 Bulletin 2020/26**

(21) Application number: **19216362.4**

(22) Date of filing: **16.12.2019**

(51) Int Cl.:
*H04N 19/117* (2014.01)  *H04N 19/132* (2014.01)
*H04N 19/136* (2014.01)  *H04N 19/31* (2014.01)
*H04N 19/46* (2014.01)  *H04N 19/70* (2014.01)
*H04N 19/80* (2014.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.12.2018  FI 20186102**

(71) Applicant: **Nokia Technologies Oy**
**02610 Espoo (FI)**

(72) Inventor: **HANNUKSELA, Miska**
**33610 Tampere (FI)**

(74) Representative: **Nokia EPO representatives**
**Nokia Technologies Oy**
**Karakaari 7**
**02610 Espoo (FI)**

(54) **A METHOD, AN APPARATUS AND A COMPUTER PROGRAM PRODUCT FOR VIDEO ENCODING AND VIDEO DECODING**

(57) The embodiments relate to a method and an apparatus for encoding and decoding. In the method for encoding a video content is obtained, the video content comprising a plurality of pictures having multiple effective exposure times. The pictures are encoded into a bitstream, wherein the encoding comprises encoding an input picture into a coded picture, and during encoding generating a reconstructed picture with a first effective exposure time; generating a second picture with a second effective exposure time from at least the reconstructed picture with the first effective exposure time; and using the second picture as a reference picture in a prediction process for at least one subsequent frame.

Fig. 6

EP 3 672 241 A1

## Description

Technical Field

The present solution generally relates to video encoding and decoding. In particular, the solution relates to deblurring filtering used in temporally scalable video coding.

Background

A video coding system may comprise an encoder that transforms an input video into a compressed representation suited for storage/transmission, and a decoder that can uncompress the compressed video representation back into a viewable form. The encoder may discard some information in the original video sequence in order to represent the video in a more compact form, for example, to enable the storage/transmission of the video information at a lower bitrate than otherwise might be needed.

Hybrid video codecs may encode the video information in two phases. Firstly, sample values (i.e. pixel values) in a certain picture area are predicted, e.g., by motion compensation means or by spatial means. Secondly, the prediction error, e.g. the difference between the prediction block of samples and the original block of samples, is coded. The video decoder on the other hand reconstructs the output video by applying prediction means similar to the encoder to form a prediction representation of the sample blocks and prediction error decoding. After applying prediction and prediction error decoding means, the decoder sums up the prediction and prediction error signals to form the output video frame.

Summary

Now there has been invented an improved method and technical equipment implementing the method for scalable video encoding and decoding. Various aspects include a method, an apparatus, and a computer readable medium comprising a computer program stored therein, which are characterized by what is stated in the independent claims. Various embodiments are disclosed in the dependent claims.

According to a first aspect, there is provided a method comprising obtaining a video content comprising a plurality of pictures having multiple effective exposure times; encoding the pictures into a bitstream; the encoding comprising encoding an input picture into a coded picture, and during encoding generating a reconstructed picture with a first effective exposure time; generating a second picture with a second effective exposure time from at least the reconstructed picture with the first effective exposure time; using the second picture as a reference picture in a prediction process for at least one subsequent frame.

According to a second aspect, there is provided an apparatus comprising means for obtaining a video content comprising a plurality of pictures having multiple effective exposure times; means for encoding the pictures into a bitstream; wherein the means for encoding comprises means for encoding an input picture into a coded picture, and generating a reconstructed picture with a first effective exposure time; means for generating a second picture with a second effective exposure time from at least the reconstructed picture with the first effective exposure time; and means for using the second picture as a reference picture in a prediction process for at least one subsequent frame.

According to an embodiment, the pictures having different effective exposure times are encoded at several, respective temporal sub-layers.

According to a third aspect, there is provided a method, comprising obtaining an encoded bitstream; decoding from the encoded bitstream pictures with first and second effective exposure times; generating a second picture from at least the decoded picture with a first effective exposure time; using the second picture as a reference picture in a prediction process for at least one subsequent picture; and outputting at least the generated second picture and the at least one subsequent picture.

According to a fourth aspect, there is provided an apparatus comprising means for obtaining an encoded bitstream; means for decoding from the encoded bitstream pictures with first and second effective exposure times; means for generating a second picture from at least the decoded picture with a first effective exposure time; means for using the second picture as a reference picture in a prediction process for at least one subsequent picture; means for outputting at least the generated second picture and the at least one subsequent picture.

According to an embodiment, the pictures having different effective exposure times are decoded from several, respective temporal sub-layers.

According to an embodiment, a filter invocation indication is decoded from the bitstream.

According to an embodiment, a persistence scope for the decoded filter invocation indication is concluded.

According to an embodiment, the filter invocation indication is decoded from the bitstream to belong to a certain sub-layer.

According to an embodiment, the second picture is assigned with a temporal sub-layer value that is equal to a sub-layer value of the filter invocation indication based on which the generated picture was generated.

According to an embodiment, when the reference picture is marked as "unused for reference", the method comprises marking corresponding additional reference picture as "unused for reference".

According to an embodiment, the means comprises at least one processor, memory including computer program code, the memory and the computer program code configured to, with the at least one processor, cause the performance of the apparatus.

According to a fifth aspect, there is provided a computer program product comprising computer program code configured to, when executed on at least one processor, cause an apparatus or a system to implement a method according to any of the aspects.

According to an embodiment, the computer program product is embodied on a non-transitory computer readable medium.

Description of the Drawings

In the following, various embodiments will be described in more detail with reference to the appended drawings, in which

Fig. 1    shows an example of generating a sequence with multiple effective exposure times;

Fig. 2    shows an example of post-processing of a sequence with multiple effective exposure times by deblurring the lowest sub-layer;

Fig. 3    shows a simplified example of a method according to an embodiment;

Fig. 4    shows an example of a decoding method according to an embodiment;

Fig. 5a    shows an example of an embodiment in a hierarchical inter prediction;

Fig. 5b    shows an example of a deblurring filtering for reconstructed pictures with long exposure times;

Fig. 6    shows an example of a deblurring filtering according to another embodiment;

Fig. 7    shows an example of a deblurring filtering according to an embodiment;

Fig. 8    shows an example of an encoding method according to an embodiment;

Fig. 9    shows an example of a decoding method according to an embodiment;

Fig. 10    is a flowchart illustrating a method according to an embodiment;

Fig. 11    is a flowchart illustrating a method according to another embodiment, and

Fig. 12    illustrates an apparatus according to an embodiment.

Description of Example Embodiments

When the exposure time of video frames has been short compared to the frame duration used in displaying, viewers might perceive strobing, which may be understood as a sequence of pictures observed like illuminated by a strobe light source. Temporally scalable video may suffer from strobing (temporal aliasing) when a temporally subsampled version of the video is displayed. In the following, several embodiments will be described in the context of coding and decoding of digital image/video material. In particular, the several embodiments are targeted to deblurring filtering suitable to be used in temporally scalable video.

The Advanced Video Coding (H.264/AVC) standard was developed by the Joint Video Team (JVT) of the Video Coding Experts Group (VCEG) of the Telecommunications Standardization Sector of International Telecommunication Union (ITU-T) and the Moving Picture Experts Group (MPEG) of International Organisation for Standardization (ISO) / International Electrotechnical Commission (IEC). The H.264/AVC standard is published by both parent standardization organizations, and it is referred to as ITU-T Recommendation H.264 and ISO/IEC International Standard 14496-10, also known as MPEG-4 Part 10 Advanced Video Coding (AVC). There have been multiple versions of the H.264/AVC standard, integrating new extensions or features to the specification. These extensions include Scalable Video Coding (SVC) and Multiview Video Coding (MVC).

High Efficiency Video Coding (HEVC) is an efficient video compression standard also known as H.265 and MPEG-H Part 2. HEVC was developed by the Joint Collaborative Team on Video Coding (JCT-VC), a collaboration between the ISO/IEC MPEG and ITU-T VCEG.

The Versatile Video Coding standard (WC, H.266, or H.266/VVC) is presently under development by the Joint Video Experts Team (JVET), which is a collaboration between the ISO/IEC MPEG and ITU-T VCEG.

Video codec may comprise an encoder that transforms the input video into a compressed representation suited for storage/transmission and a decoder that can uncompress the compressed video representation back into a viewable form. The compressed representation may be referred to as a bitstream or a video bitstream. A video encoder and/or a video decoder may also be separate from each other, i.e. need not form a codec. The encoder may discard some information in the original video sequence in order to represent the video in a more compact form (that is, at lower bitrate).

Hybrid video codecs, for example ITU-T H.264, may encode the video information in two phases. At first, pixel values in a certain picture area (or "block") are predicted for example by motion compensation means (finding and indicating an area in one of the previously coded video frames that corresponds closely to the block being coded) or by spatial means (using the pixel values around the block to be coded in a specified manner). Then, the prediction error, i.e. the difference between the predicted block of pixels and the original block of pixels, is coded. This may be done by transforming the difference in pixel values using a specified transform (e.g. Discreet Cosine Transform (DCT) or a variant of it), quantizing the coefficients and entropy coding the quantized coefficients. By varying the fidelity of the quantization process, encoder can control the balance between the accuracy of the pixel representation (picture quality) and size of the resulting coded video representation (file size or transmission bitrate).

In temporal prediction, the sources of prediction are previously decoded pictures (a.k.a. reference pictures). In intra block copy (IBC; a.k.a. intra-block-copy prediction or current picture referencing), prediction is applied similarly to temporal prediction, but the reference picture is the current picture and only previously decoded samples can be referred in the prediction process. Inter-layer or inter-view prediction may be applied similarly to temporal prediction, but the reference picture is a decoded picture from another scalable layer or from another view, respectively. In some cases, inter prediction may refer to temporal prediction only, while in other cases inter prediction may refer collectively to temporal prediction and any of intra block copy, inter-layer prediction, and inter-view prediction provided that they are performed with the same or similar process than temporal prediction. Inter prediction or temporal prediction may sometimes be referred to as motion compensation or motion-compensated prediction.

Intra prediction utilizes the fact that adjacent pixels within the same picture are likely to be correlated. Intra prediction can be performed in spatial or transform domain, i.e., either sample values or transform coefficients can be predicted. Intra prediction is typically exploited in intra coding, where no inter prediction is applied.

One outcome of the coding procedure is a set of coding parameters, such as motion vectors and quantized transform coefficients. Many parameters can be entropy-coded more efficiently if they are predicted first from spatially or temporally neighboring parameters. For example, a motion vector may be predicted from spatially adjacent motion vectors and only the difference relative to the motion vector predictor may be coded. Prediction of coding parameters and intra prediction may be collectively referred to as in-picture prediction.

Entropy coding/decoding may be performed in many ways. For example, context-based coding/decoding may be applied, where in both the encoder and the decoder modify the context state of a coding parameter based on previously coded/decoded coding parameters. Context-based coding may for example be context adaptive binary arithmetic coding (CABAC) or context-based variable length coding (CAVLC) or any similar entropy coding. Entropy coding/decoding may alternatively or additionally be performed using a variable length coding scheme, such as Huffman coding/decoding or Exp-Golomb coding/decoding. Decoding of coding parameters from an entropy-coded bitstream or codewords may be referred to as parsing.

Video coding standards may specify the bitstream syntax and semantics as well as the decoding process for error-free bitstreams, whereas the encoding process might not be specified, but encoders may just be required to generate conforming bitstreams. Bitstream and decoder conformance can be verified with the Hypothetical Reference Decoder (HRD). The standards may contain coding tools that help in coping with transmission errors and losses, but the use of the tools in encoding may be optional and decoding process for erroneous bitstreams might not have been specified.

A syntax element may be defined as an element of data represented in the bitstream. A syntax structure may be defined as zero or more syntax elements present together in the bitstream in a specified order.

An elementary unit for the input to an encoder and the output of a decoder, respectively, is typically a picture. A picture given as an input to an encoder may also be referred to as a source picture, and a picture decoded by a decoded may be referred to as a decoded picture or a reconstructed picture.

The source and decoded pictures are each comprised of one or more sample arrays, such as one of the following sets of sample arrays:

- Luma (Y) only (monochrome).
- Luma and two chroma (YCbCr or YCgCo).
- Green, Blue and Red (GBR, also known as RGB).
- Arrays representing other unspecified monochrome or tri-stimulus color samplings (for example, YZX, also known as XYZ).

In the following, these arrays may be referred to as luma (or L or Y) and chroma, where the two chroma arrays may be referred to as Cb and Cr; regardless of the actual color representation method in use. The actual color representation method in use can be indicated e.g. in a coded bitstream e.g. using the Video Usability Information (VUI) syntax of HEVC or alike. A component may be defined as an array or single sample from one of the three sample arrays (luma and two chroma) or the array or a single sample of the array that compose a picture in monochrome format.

A picture may be defined to be either a frame or a field. A frame comprises a matrix of luma samples and possibly the corresponding chroma samples. A field is a set of alternate sample rows of a frame and may be used as encoder input, when the source signal is interlaced. Chroma sample arrays may be absent (and hence monochrome sampling may be in use) or chroma sample arrays may be subsampled when compared to luma sample arrays.

In some video codecs, such as H.265/HEVC, video pictures are divided into coding units (CU) covering the area of the picture. A CU may comprise one or more prediction units (PU) defining the prediction process for the samples within the CU and one or more transform units (TU) defining the prediction error coding process for the samples in the said CU. CU may comprise a square block of samples with a size selectable from a predefined set of possible CU sizes. A CU with the maximum allowed size may be named as LCU (largest coding unit) or CTU (coding tree unit), and the video picture is divided into non-overlapping CTUs. A CTU can be further split into a combination of smaller CUs, e.g. by recursively splitting the CTU and resultant CUs. Each resulting CU may have at least one PU and at least one TU associated with it. Each PU and TU can be further split into smaller PUs and TUs in order to increase granularity of the prediction and prediction error coding processes, respectively. Each PU has prediction information associated with it defining what kind of a prediction is to be applied for the pixels within that PU (e.g. motion vector information for inter predicted PUs and intra prediction directionality information for intra predicted PUs). Similarly, each TU is associated with information describing the prediction error decoding process for the samples within the said TU (including e.g. DCT coefficient information). It may be signaled at CU level whether prediction error coding is applied or not for each CU. In the case there is no prediction error residual associated with the CU, it can be considered there are no TUs for the said CU. The division of the image into CUs, and division of CUs into PUs and TUs may be signaled in the bitstream allowing the decoder to reproduce the intended structure of these units.

The decoder reconstructs the output video by applying prediction means similar to the encoder to form a predicted representation of the pixel blocks (using the motion or spatial information created by the encoder and stored in the compressed representation) and prediction error decoding (inverse operation of the prediction error coding recovering the quantized prediction error signal in spatial pixel domain). After applying prediction and prediction error decoding means the decoder sums up the prediction and prediction error signals (pixel values) to form the output video frame. The decoder (and encoder) can also apply additional filtering means to improve the quality of the output video before passing it for display and/or storing it as prediction reference for the forthcoming frames in the video sequence.

The filtering may for example include one more of the following: deblocking, sample adaptive offset (SAO), and/or adaptive loop filtering (ALF).

The deblocking loop filter may include multiple filtering modes or strengths, which may be adaptively selected based on the features of the blocks adjacent to the boundary, such as the quantization parameter value, and/or signaling included by the encoder in the bitstream. For example, the deblocking loop filter may comprise a normal filtering mode and a strong filtering mode, which may differ in terms of the number of filter taps (i.e. number of samples being filtered on both sides of the boundary) and/or the filter tap values. For example, filtering of two samples along both sides of the boundary may be performed with a filter having the impulse response of (3 7 9 -3)/16, when omitting the potential impact of a clipping operation.

The motion information may be indicated with motion vectors associated with each motion compensated image block in video codecs. Each of these motion vectors represents the displacement of the image block in the picture to be coded (in the encoder side) or decoded (in the decoder side) and the prediction source block in one of the previously coded or decoded pictures. In order to represent motion vectors efficiently those may be coded differentially with respect to block specific predicted motion vectors. The predicted motion vectors may be created in a predefined way, for example calculating the median of the encoded or decoded motion vectors of the adjacent blocks. Another way to create motion vector predictions is to generate a list of candidate predictions from adjacent blocks and/or co-located blocks in temporal reference pictures and signaling the chosen candidate as the motion vector predictor. In addition to predicting the motion vector values, the reference index of previously coded/decoded picture can be predicted. The reference index may be predicted from adjacent blocks and/or co-located blocks in temporal reference picture. Moreover, high efficiency video codecs may employ an additional motion information coding/decoding mechanism, often called merging/merge mode, where all the motion field information, which includes motion vector and corresponding reference picture index for each available reference picture list, is predicted and used without any modification/correction. Similarly, predicting the motion field information is carried out using the motion field information of adjacent blocks and/or co-located blocks in temporal reference pictures and the used motion field information is signaled among a list of motion field candidate list filled with motion field information of available adjacent/co-located blocks.

Video codecs may support motion compensated prediction from one source image (uni-prediction) and two sources (bi-prediction). In the case of uni-prediction a single motion vector is applied whereas in the case of bi-prediction two motion vectors are signaled and the motion compensated predictions from two sources are averaged to create the final sample prediction. In the case of weighted prediction, the relative weights of the two predictions can be adjusted, or a signaled offset can be added to the prediction signal.

In addition to applying motion compensation for inter picture prediction, similar approach can be applied to intra picture prediction. In this case the displacement vector indicates where from the same picture a block of samples can be copied to form a prediction of the block to be coded or decoded. This kind of intra block copying methods can improve the coding efficiency substantially in presence of repeating structures within the frame - such as text or other graphics.

The prediction residual after motion compensation or intra prediction may be first transformed with a transform kernel (like DCT) and then coded. The reason for this is that often there still exists some correlation among the residual and transform can in many cases help reduce this correlation and provide more efficient coding.

Video encoders may utilize Lagrangian cost functions to find optimal coding modes, e.g. the desired Macroblock mode and associated motion vectors. This kind of cost function uses a weighting factor $\lambda$ to tie together the (exact or estimated) image distortion due to lossy coding methods and the (exact or estimated) amount of information that is required to represent the pixel values in an image area:

$$C = D + \lambda R \qquad \textbf{(Eq. 1)}$$

Where $C$ is the Lagrangian cost to be minimized, $D$ is the image distortion (e.g. Mean Squared Error) with the mode and motion vectors considered, and $R$ the number of bits needed to represent the required data to reconstruct the image block in the decoder (including the amount of data to represent the candidate motion vectors).

Some codecs use a concept of picture order count (POC). A value of POC is derived for each picture and is non-decreasing with increasing picture position in output order. POC therefore indicates the output order of pictures. POC may be used in the decoding process for example for implicit scaling of motion vectors and for reference picture list initialization. Furthermore, POC may be used in the verification of output order conformance.

A Decoded Picture Buffer (DPB) may be used in the encoder and/or in the decoder. There may be two reasons to buffer decoded pictures, for references in inter prediction and for reordering decoded pictures into output order. Some coding formats, such as HEVC, provide a great deal of flexibility for both reference picture marking and output reordering, separate buffers for reference picture buffering and output picture buffering may waste memory resources. Hence, the DPB may include a unified decoded picture buffering process for reference pictures and output reordering. A decoded picture may be removed from the DPB when it is no longer used as a reference and is not needed for output.

A decoder may comprise a picture output process. The output process may be considered to be a process in which the decoder provides decoded and cropped pictures as the output of the decoding process. The output process is typically a part of video coding standards, typically as a part of the hypothetical reference decoder specification. In output cropping, lines and/or columns of samples may be removed from decoded pictures according to a cropping rectangle to form output pictures. A cropped decoded picture may be defined as the result of cropping a decoded picture based on the conformance cropping window specified e.g. in the sequence parameter set that is referred to by the corresponding coded picture.

One or more syntax structures for (decoded) reference picture marking may exist in a video coding system. An encoder generates an instance of a syntax structure e.g. in each coded picture, and a decoder decodes an instance of the syntax structure e.g. from each coded picture. For example, the decoding of the syntax structure may cause pictures to be adaptively marked as "used for reference" or "unused for reference".

A reference picture set (RPS) syntax structure of HEVC is an example of a syntax structure for reference picture marking. A reference picture set valid or active for a picture includes all the reference pictures that may be used as reference for the picture and all the reference pictures that are kept marked as "used for reference" for any subsequent pictures in decoding order. The reference pictures that are kept marked as "used for reference" for any subsequent pictures in decoding order but that are not used as reference picture for the current picture or image segment may be considered inactive. For example, they might not be included in the initial reference picture list(s).

In some coding formats and codecs, a distinction is made between so-called short-term and long-term reference pictures. This distinction may affect some decoding processes such as motion vector scaling. Syntax structure(s) for marking reference pictures may be indicative of marking a picture as "used for long-term reference" or "used for short-term reference".

In some coding formats, reference picture for inter prediction may be indicated with an index to a reference picture list. In some codecs, two reference picture lists (reference picture list 0 and reference picture list 1) are generated for each bi-predictive (B) slice, and one reference picture list (reference picture list 0) is formed for each inter-coded (P) slice.

A reference picture list, such as the reference picture list 0 and the reference picture list 1, may be constructed in two steps: First, an initial reference picture list is generated. The initial reference picture list may be generated using an algorithm pre-defined in a standard. Such an algorithm may use e.g. POC and/or temporal sublayer, as the basis. The algorithm may process reference pictures with particular marking(s), such as "used for reference", and omit other reference pictures, i.e. avoid inserting other reference pictures into the initial reference picture list. An example of such other reference picture is a reference picture marked as "unused for reference" but still residing in the decoded picture buffer waiting to be output from the decoder. Second, the initial reference picture list may be reordered through a specific syntax structure, such as reference picture list reordering (RPLR) commands of H.264/AVC or reference picture list modification syntax structure of HEVC or anything alike. Furthermore, the number of active reference pictures may be indicated for each list, and the use of the pictures beyond the active ones in the list as reference for inter prediction is disabled. One or both the reference picture list initialization and reference picture list modification may process only active reference pictures among those reference pictures that are marked as "used for reference" or alike.

Scalable video coding refers to coding structure where one bitstream can contain multiple representations of the content at different bitrates, resolutions or frame rates. In these cases, the receiver can extract the desired representation depending on its characteristics (e.g. resolution that matches best the display device). Alternatively, a server or a network element can extract the portions of the bitstream to be transmitted to the receiver depending on e.g. the network characteristics or processing capabilities of the receiver. A scalable bitstream may include a "base layer" providing the lowest quality video available and one or more enhancement layers that enhance the video quality when received and decoded together with the lower layers. In order to improve coding efficiency for the enhancement layers, the coded representation of that layer may depend on the lower layers. E.g. the motion and mode information of the enhancement layer can be predicted from lower layers. Similarly, the pixel data of the lower layers can be used to create prediction for the enhancement layer.

A scalable video codec for quality scalability (also known as Signal-to-Noise or SNR) and/or spatial scalability may be implemented as follows. For a base layer, a conventional non-scalable video encoder and decoder is used. The reconstructed/decoded pictures of the base layer are included in the reference picture buffer for an enhancement layer. In H.264/AVC, HEVC, and similar codecs using reference picture list(s) for inter prediction, the base layer decoded pictures may be inserted into a reference picture list(s) for coding/decoding of an enhancement layer picture similarly to the decoded reference pictures of the enhancement layer. Consequently, the encoder may choose a base-layer reference picture as inter prediction reference and indicate its use e.g. with a reference picture index in the coded bitstream. The decoder decodes from the bitstream, for example from a reference picture index, that a base-layer picture is used as inter prediction reference for the enhancement layer. When a decoded base-layer picture is used as prediction reference for an enhancement layer, it is referred to as an inter-layer reference picture.

In addition to quality scalability following scalability modes exist:

- Spatial scalability: Base layer pictures are coded at a lower resolution than enhancement layer pictures.
- Bit-depth scalability: Base layer pictures are coded at lower bit-depth (e.g. 8 bits) than enhancement layer pictures (e.g. 10 or 12 bits).
- Chroma format scalability: Enhancement layer pictures provide higher fidelity in chroma (e.g. coded in 4:4:4 chroma format) than base layer pictures (e.g. 4:2:0 format).

In all of the above scalability cases, base layer information could be used to code enhancement layer to minimize the additional bitrate overhead.

Scalability can be enabled in two basic ways. Either by introducing new coding modes for performing prediction of pixel values or syntax from lower layers of the scalable representation or by placing the lower layer pictures to the reference picture buffer (decoded picture buffer, DPB) of the higher layer. The first approach is more flexible and thus can provide better coding efficiency in most cases. However, the second, reference frame-based scalability, approach can be implemented very efficiently with minimal changes to single layer codecs while still achieving majority of the coding efficiency gains available. Essentially a reference frame -based scalability codec can be implemented by utilizing the same hardware or software implementation for all the layers, just taking care of the DPB management by external means.

An elementary unit for the output of encoders of some coding formats, such as HEVC, and the input of decoders of some coding formats, such as HEVC, is a Network Abstraction Layer (NAL) unit. For transport over packet-oriented networks or storage into structured files, NAL units may be encapsulated into packets or similar structures.

NAL units consist of a header and payload. In HEVC, a two-byte NAL unit header is used for all specified NAL unit types, while in other codecs NAL unit header may be similar to that in HEVC.

In HEVC, the NAL unit header contains one reserved bit, a six-bit NAL unit type indication, a three-bit temporal_id_plus1 indication for temporal level or sublayer (may be required to be greater than or equal to 1) and a six-bit nuh_layer_id syntax element. The temporal_id_plus1 syntax element may be regarded as a temporal identifier for the NAL unit, and a zero-based TemporalId variable may be derived as follows: TemporalId = temporal_id_plus1 - 1. The abbreviation TID may be used to interchangeably with the TemporalId variable. TemporalId equal to 0 corresponds to the lowest temporal level. The value of temporal_id_plus1 is required to be non-zero in order to avoid start code emulation involving the two NAL unit header bytes. The bitstream created by excluding all VCL NAL units having a TemporalId greater than or equal to a selected value and including all other VCL NAL units remains conforming. Consequently, a picture having TemporalId equal to tid_value does not use any picture having a TemporalId greater than tid_value as inter prediction reference. A sub-layer or a temporal sub-layer may be defined to be a temporal scalable layer (or a temporal layer, TL) of a temporal scalable bitstream. Such temporal scalable layer may comprise VCL NAL units with a particular value of the TemporalId variable and the associated non-VCL NAL units. nuh_layer_id can be understood as a scalability layer identifier.

NAL units can be categorized into Video Coding Layer (VCL) NAL units and non-VCL NAL units. VCL NAL units are typically coded slice NAL units. In HEVC, VCL NAL units contain syntax elements representing one or more CU. In HEVC, the NAL unit type within a certain range indicates a VCL NAL unit, and the VCL NAL unit type indicates a picture type.

Images can be split into independently codable and decodable image segments (e.g. slices or tiles or tile groups). In Such image segments may enable parallel processing, "Slices" in this description may refer to image segments constructed of certain number of basic coding units that are processed in default coding or decoding order, while "tiles" may refer to image segments that have been defined as rectangular image regions. A tile group may be defined as a group of one or more tiles. Image segments may be coded as separate units in the bitstream, such as VCL NAL units in H.264/AVC and HEVC. Coded image segments may comprise a header and a payload, wherein the header contains parameter values needed for decoding the payload.

A non-VCL NAL unit may be for example one of the following types: a sequence parameter set, a picture parameter set, a supplemental enhancement information (SEI) NAL unit, an access unit delimiter, an end of sequence NAL unit, an end of bitstream NAL unit, or a filler data NAL unit. Parameter sets may be needed for the reconstruction of decoded pictures, whereas many of the other non-VCL NAL units are not necessary for the reconstruction of decoded sample values.

Some coding formats specify parameter sets that may carry parameter values needed for the decoding or reconstruction of decoded pictures. Parameters that remain unchanged through a coded video sequence may be included in a sequence parameter set (SPS). In addition to the parameters that may be needed by the decoding process, the sequence parameter set may optionally contain video usability information (VUI), which includes parameters that may be important for buffering, picture output timing, rendering, and resource reservation. A picture parameter set (PPS) contains such parameters that are likely to be unchanged in several coded pictures. A picture parameter set may include parameters that can be referred to by the coded image segments of one or more coded pictures. A header parameter set (HPS) has been proposed to contain such parameters that may change on picture basis.

A parameter set may be activated when it is referenced e.g. through its identifier. For example, a header of an image segment, such as a slice header, may contain an identifier of the PPS that is activated for decoding the coded picture containing the image segment. A PPS may contain an identifier of the SPS that is activated, when the PPS is activated. An activation of a parameter set of a particular type may cause the deactivation of the previously active parameter set of the same type.

Instead of or in addition to parameter sets at different hierarchy levels (e.g. sequence and picture), video coding formats may include header syntax structures, such as a sequence header or a picture header. A sequence header may precede any other data of the coded video sequence in the bitstream order. A picture header may precede any coded video data for the picture in the bitstream order.

The phrase along the bitstream (e.g. indicating along the bitstream) or along a coded unit of a bitstream (e.g. indicating along a coded tile) may be used in claims and described embodiments to refer to transmission, signaling, or storage in a manner that the "out-of-band" data is associated with but not included within the bitstream or the coded unit, respectively. The phrase decoding along the bitstream or along a coded unit of a bitstream or alike may refer to decoding the referred out-of-band data (which may be obtained from out-of-band transmission, signaling, or storage) that is associated with the bitstream or the coded unit, respectively. For example, the phrase along the bitstream may be used when the bitstream is contained in a container file, such as a file conforming to the ISO Base Media File Format, and certain file metadata is stored in the file in a manner that associates the metadata to the bitstream, such as boxes in the sample entry for a track containing the bitstream, a sample group for the track containing the bitstream, or a timed metadata track associated with the track containing the bitstream.

A coded picture is a coded representation of a picture.

A Random Access Point (RAP) picture, which may also be referred to as an intra random access point (IRAP) picture, may comprise only intra-coded image segments. Furthermore, a RAP picture may constrain subsequence pictures in output order to be such that they can be correctly decoded without performing the decoding process of any pictures that precede the RAP picture in decoding order.

A coded video sequence (CVS) may be defined as such a sequence of coded pictures in decoding order that is independently decodable and is followed by another coded video sequence or the end of the bitstream.

Bitstreams or coded video sequences can be encoded to be temporally scalable as follows. Each picture may be assigned to a particular temporal sub-layer. Temporal sub-layers may be enumerated e.g. from 0 upwards. The lowest temporal sub-layer, sub-layer 0, may be decoded independently. Pictures at temporal sub-layer 1 may be predicted from reconstructed pictures at temporal sub-layers 0 and 1. Pictures at temporal sub-layer 2 may be predicted from reconstructed pictures at temporal sub-layers 0, 1, and 2, and so on. In other words, a picture at temporal sub-layer N does not use any picture at temporal sub-layer greater than N as a reference for inter prediction. The bitstream created by excluding all pictures greater than or equal to a selected sub-layer value and including pictures remains conforming.

Temporally scalable video may suffer from strobing (temporal aliasing) when a temporally subsampled version of the video is displayed. Strobing may be perceived as stuttering and/or stop-motion animation and/or motion discontinuities. For example, when a 120-Hz video is coded in a temporally scalable manner, the exposure times are optimized for 120-Hz displaying, but actually 30-Hz or 60-Hz decoding and/or signaling may take place. A normal exposure time for a picture may be approximately half of the picture interval. For example, if the picture rate is 50 Hz, the interval between pictures is 1000 / 50 msec = 20 msec, and a normal exposure time could be 10 msec.

Modern displays are capable of reproducing very high picture rates up to several hundreds of Hz. High-frame-rate capturing (e.g. 240 Hz) is nowadays available in a variety of devices from smartphones or consumer-grade digital cameras to professional equipment. Moreover, high frame rates are preferred for achieving higher perceived video quality, and subjective studies have shown that perceived video quality increases at least up to 240 Hz picture rate, potentially up to even higher picture rates. High frame rates are therefore desirable but pose a challenge in decoding complexity, memory access speed (for writing decoded samples and/or for accessing samples in reference pictures), and the amount of memory needed for decoded frames.

To enable decoding at a selectable decoding capacity (decoding complexity, memory access speed, and the amount of memory needed for decoded frames), temporally scalable video coding can be used. Additionally, temporally scalable video coding helps in picture-level parallelization of video encoding and decoding.

Temporally hierarchical inter prediction that may be combined with temporally scalable coding helps in achieving higher compression efficiency.

Video services can be designed in a manner that legacy clients or clients with the lowest decoding capacity are able to access and decode the lowest temporal sub-layer and display it as such. More advanced clients can access and decode a greater number of sub-layers. This can be implemented by generating the content of the lowest sub-layer in a manner that every other picture is dropped from the uncompressed video stream and this temporally decimated video sequence is then encoded as the lowest sub-layer. However, this may cause strobing. To avoid strobing to be visible, the content of the lowest sub-layer can be generated in a manner that motion blur is suitable for the frame rate of the lowest sub-layer, i.e. virtually having an exposure time suitable for the frame rate of the lowest sub-layer.".

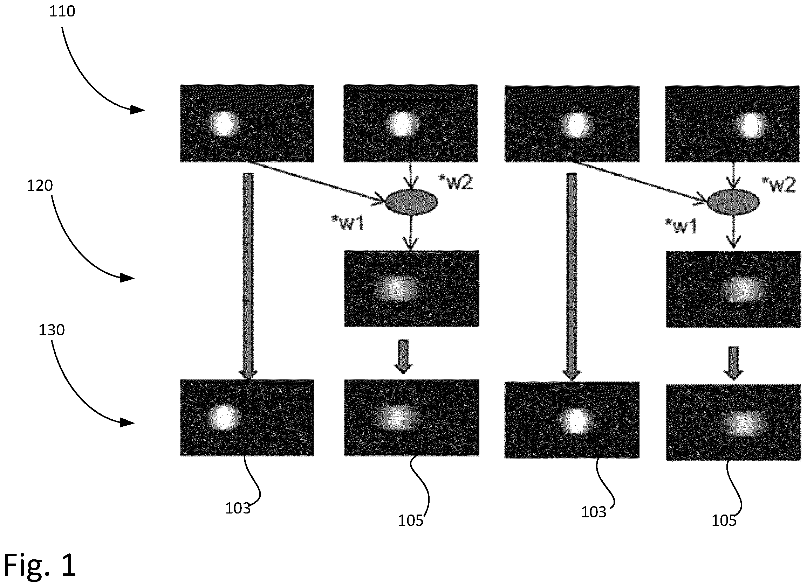

Figure 1 illustrates an example of creation of a picture sequence with multiple effective exposure times, where pictures 110 from a picture sequence of a high picture rate, such as 120 frames per second, and pictures 120 from a picture sequence of a halved picture rate, e.g. 60 frames per second, are combined in a single temporally scalable stream 130. As is realized from Figure 1, the pictures 120 are the weighted averages of the pictures 110. The resulting stream 130 is composed of two decoded temporal sub-layers: sub-layer 1 103 and sub-layer 0 105. When w1 and w2 are the weights for weighted averaging as illustrated in Figure 1, w1 may be selected from the range of 0 (exclusive) to 0.5 (inclusive), w2 may be selected from the range of 0.5 (inclusive) to 1 (exclusive), and the selection may be performed so that the sum of w1 and w2 is equal to 1. It needs to be understood that weighted averaging is merely one example of a filtering process to generate motion blur for pictures coded at sub-layer 0 and that other filtering process(es) could be applied similarly.

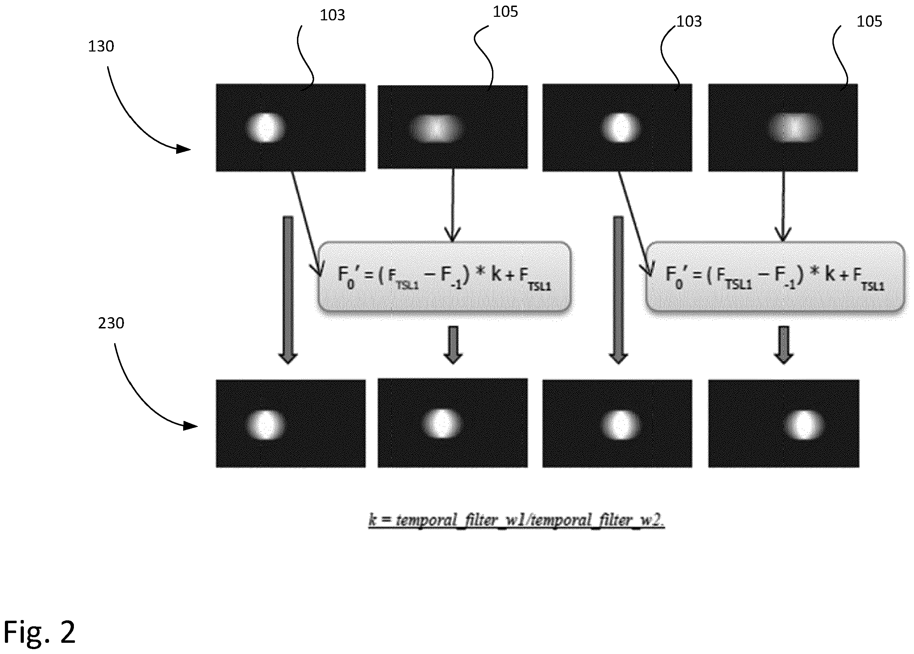

A combination of decoded sub-layers 0 and 1 might not be suitable for displaying as such, because of varying level of motion blur in different frames. Thus, post-processing of the decoded frames may be applied to deblur the decoded lowest sub-layer. Figure 2 illustrates an example of the post-processing of the decoded frames. In the post-processing, a sequence with multiple effective exposure times 130, as generated in Figure 1 and possibly encoded and decoded, is processed so that the pictures of temporal sub-layer 1 103 are extracted, and pictures of temporal sub-layer 0 105 are processed according to a temporal filter to obtain a recovered picture $F'_0$. In Figure 2, $F_{TSLI}$ refers to the current picture from the temporal sub-layer 1, and $F_{-1}$ is the previous picture from the temporal sub-layer 0, and $k=temporal\_filter\_w1/temporal\_filter\_w2$, where $temporal\_filter\_w1$ and $temporal\_filter\_w2$ may be the same as w1 and w2, respectively, in Figure 1. It needs to be understood that weighted averaging is merely one example of a de-blur filtering process for pictures coded at sub-layer 0 and that other filtering process(es) could be applied similarly. The post-processing generates a received high-picturerate (e.g. 120 fps) stream 230.

The development of various neural network (NN) techniques, especially the ones related to deep learning, has enabled to learn algorithms for several tasks from the raw data, which algorithms may outperform algorithms which have been developed for many years using traditional (non-learning based) methods.

Artificial neural networks, or simply neural networks, are parametric computation graphs comprising units and connections. The units may be arranged in successive layers, and in many neural network architectures only units in adjacent layers are connected. Each connection has an associated parameter or weight, which defines the strength of the connection. The weight gets multiplied by the incoming signal in that connection. In fully-connected layers of a feedforward neural network, each unit in a layer is connected to each unit in the following layer. So, the signal which is output by a certain unit gets multiplied by the connections connecting that unit to another unit in the following layer. The latter unit may then perform a simple operation such as a sum of the weighted signals.

Apart from fully-connected layers, there are different types of layers, such has but not limited to convolutional layers, non-linear activation layers, batch-normalization layers, and pooling layers.

The input layer receives the input data, such as images, and the output layer is task-specific and outputs an estimate of the desired data, for example a vector whose values represent a class distribution in the case of image classification. The "quality" of the neural network's output is evaluated by comparing it to ground-truth output data. This comparison would then provide a "loss" or "cost" function.

The weights of the connections represent the biggest part of the learnable parameters of a neural network. Other learnable parameters may be for example the parameter of the batch-normalization layer.

The parameters are learned by means of a training algorithm, where the goal is to minimize the loss function on a training dataset. The training dataset is regarded as a representative sample of the whole data. One popular learning approach is based on iterative local methods, where the loss is minimized by following the negative gradient direction. Here, the gradient is understood to be the gradient of the loss with respect to the weights of the neural network. The loss is represented by the reconstructed prediction error. Computing the gradient of the whole dataset may be computationally too heavy, thus learning is performed in sub-steps, where at each step a mini-batch of data is sampled, and gradients are computed from the mini-batch. This is regarded o as stochastic gradient descent. The gradients can be computed by back-propagation algorithm, where errors are propagated from the output layer to the input layer, by using the chain rule for differentiation. If the loss function or some components of the neural network are not differentiable, it is still possible to estimate the gradient of the loss by using policy gradient methods, such as those used in reinforcement learning. The computed gradients are then used by one of the available optimization routines (such as stochastic gradient descent, Adam, RMSprop, etc.), to compute a weight update, which is then applied to update the weights of the network. After a full pass over the training dataset, the process is repeated several times until a convergence criterion (e.g. generalization criterion) is met. The gradients of the loss, i.e. the gradients of the reconstructed prediction error with respect to the weights of the neural network, may be referred to as the training signal.

Online training may include learning the parameters of the neural network continuously on a stream of data, as opposed to the case where the dataset is finite and given in its entirety and the network is used only after training has completed.

There have been several approaches to using neural nets for performing most computation blocks in data compression pipelines. When these neural nets are all trained simultaneously, this approach is usually referred to as end-to-end deep learning based compression. In such systems, one or more neural nets perform the compression steps, and one or more neural nets perform the de-compression steps. A simple approach would consist of using a "neural-encoder" network, which maps the input data to a latent space, where the data is compressed into a lower-dimensional vector. This vector can then be quantized and entropy-encoded. The decoder would embed a so-called "neural-decoder" network which would map back the de-quantized and entropy-decoded latent code to the image space.

Some neural net approaches have been developed for implementing video/image video coding tools through deep learning. For example, a neural net-based intra prediction has been introduced, where a prediction block is generated from neighboring decoded blocks used a neural net. In block-wise reduced resolution coding with neural net-based upsampling, a block (such as a CTU in HEVC) is adaptively encoded either with full spatial resolution or reduced spatial resolution, e.g. depending on rate-distortion optimized selection. In order to keep the coding and decoding for other blocks unchanged, the reconstructed reduced resolution block is upsampled to full resolution within the coding/decoding loop. The upsampling is adaptively selected between a conventional upsamples and a NN-based upsampler. However, these neural net approaches are focused on enhancing the encoding through improving the operation of the coding tools.

In the example shown in Figures 1 and 2, the decoded frames of sub-layer 0 are blurry. Therefore, they may not be optimal prediction references for frames of sub-layer 1. In addition, temporal filtering causes a delay of one frame interval in the output process. The present solution provides several embodiments for deblurring filtering for blurred pictures. In addition, one of the embodiments uses neural network online learning for deblurring filtering in the video (de)coding loop.

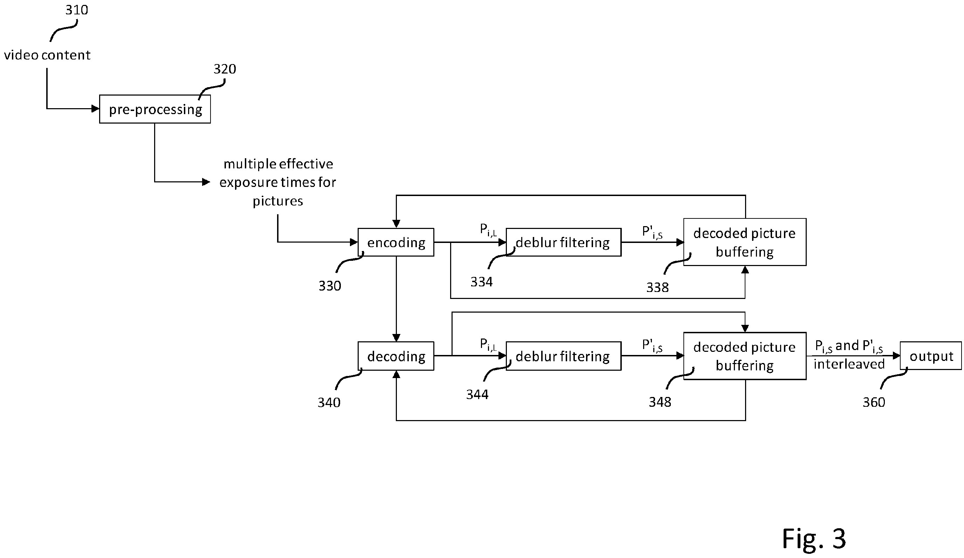

The present embodiments are targeted to a method, a simplified example of which is illustrated in Figure 3. The method comprises obtaining video content 310, pre-processing 320 the video content to provide multiple effective exposure times for frames, and encoding 330 the pictures with multiple effective exposure times into one or more sub-layers. Pictures are reconstructed as part encoding, wherein reconstructed pictures are identical to decoded pictures resulting from decoding the encoded pictures. Certain reconstructed pictures $P_{i,L}$ are selected to be deblurred. The selection may be performed based on the effective exposure time. Deblurring filter may also take other pictures ($Pi_{,S}$) as input. The deblur filtering 334 performs deblur filtering according to the present embodiments, and results into deblurred pictures P'i,s. Both the deblurred pictures and the reconstructed pictures may be buffered in the decoded picture buffering 338. The decoded picture buffering 338 may also provide deblurred and/or reconstructed pictures to the encoding process to be used as reference pictures for prediction.

The encoded frames are provided for decoding 340, which produces decoded pictures as output. Certain reconstructed pictures $P_{i,L}$ are selected to be deblurred. The selection may be performed e.g. based on temporal sub-layer, the effective exposure time, and/or control signals or indications decoded from or along the bitstream. The deblur filtering 344 and the decoded picture buffering 348 may be essentially similar to the respective blocks 334 and 338 in the encoding side: The deblur filtering 344 performs deblur filtering according to the present embodiments, and results into deblurred pictures $P'_{i,S}$. Both the deblurred pictures and the reconstructed pictures may be buffered in the decoded picture buffering 348. The decoded picture buffering 348 may provide deblurred and/or reconstructed pictures to the decoding process to be used as reference pictures for prediction. When the decoder outputs at a "high" picture rate (i.e. the picture rate represented by the entire bitstream to be decoded), the output 360 of the decoding comprises the reconstructed pictures $P_{i,S}$ and generated pictures (i.e. deblurred pictures) $P'_{i,S}$. Pictures $P_{i,L}$ may be omitted from the output.

It needs to be understood that even though Figure 3 presents operations for both an encoder and a decoder, embodiments may separately apply to an encoder or to a decoder.

In the following, the elements of Figure 3 are discussed in more detailed manner.

As shown in Figure 3, a video content 310 is pre-processed 320 prior to encoding 330 to have multiple effective exposure times for frames. For example, from a stream comprising input pictures having a specific exposure time, two input pictures may be processed with pixel-wise weighting to obtain a picture with a different effective exposure time. Such pictures may be combined, e.g. interleaved, into a stream with unprocessed pictures having the original effective exposure time. The original exposure time can be a short effective exposure time, whereupon the different effective exposure time can be a long effective exposure time. For example, if the picture rate of the video content is 50 Hz, a normal exposure time could be half of the picture interval, i.e. 10, msec, which is here regarded as the short effective exposure time. The long effective exposure time could approximate a normal exposure time for the video content at half the picture rate. For 50-Hz video content, a halved picture rate is 25 Hz, corresponding to picture interval of 40 msec, for which a normal effective exposure time could be 20 msec (i.e. half of the picture interval). As can be understood, the long and short effective exposure times depend on the picture rate of the video content. Effective exposure time may be understood a feature of a processed video frame or picture that represents the motion blur of the picture or frame. For example, a frame having a long effective exposure time and therefore more motion blur may be generated from frame(s) having originally short exposure time and therefore less motion blur. Sometimes an original frame may be also indicated to have an effective exposure time, which may be in that case equal to the original exposure time. It is noted that different choices of "long" and "short" effective exposure times can be made e.g. on the basis of the nature of the content, particularly on the type and amount of motion

Pictures that have the long effective exposure time may then be encoded 330 into temporal sub-layer 0, and pictures having the short effective exposure time may be encoded 330 into temporal sub-layer 1. It is appreciated that the specific sub-layers are merely an example and therefore other sublayers can also be used instead. It is also appreciated that the solution does not require encoding picture at several sub-layers, but rather the solution can be used when all pictures are encoded at the same temporal sub-layer or the coding system does not include the feature of temporal sub-layers. It is also appreciated that a case with two effective exposure times is given as an example. However, the present solution can also be realized similarly with more than two effective exposure times.

The embodiments are described with help of the following notation, which should not be interpreted as a limiting feature:

- $C$ refers to coded picture;
- $P$ refers to reconstructed or decoded picture;
- $P'$ refers to a picture generated from at least one reconstructed picture;
- $N$ refers to a picture (de)coding order among reconstructed pictures. When $P$ and $P'$ have the same (de)coding order $N$, $P'_N$ is generated after reconstructing $P_N$ and may be considered to correspond to sampling or capturing time of $P_N$ but with a shorter effective exposure time;
- $S$ or $L$ refer to an effective exposure time to be short or long, respectively.

In the encoding process 330, an input picture $N$ is encoded into a coded picture $C_{N,L}$. As a part of the encoding, also picture with the long effective exposure time $P_{N,L}$ is reconstructed.

At least a reconstructed picture with the long effective exposure time $P_{N,L}$ is used for generating a picture $P'_{N,S}$ with the short effective exposure time. The generating may be regarded as deblurring filtering operation 334.

The generated picture $P'_{N,S}$ is used as a reference picture in a prediction process for at least one subsequent picture in (de)coding order, e.g. $P_{N+M,S}$.

The encoder may include control signals in or along the bitstream causing a decoder to execute the deblurring filtering and for the storage of deblurred pictures as reference frames. The control signals may be coded jointly, e.g. into a single syntax element, or separately, e.g. into a first syntax element for executing the deblurring filtering and a second syntax element for storing the generated picture as a reference picture. The control signals may be included in the bitstream either on sequence basis, e.g. in a sequence parameter set, or on picture basis, e.g. in a picture header, a tile group header, a slice header, a picture parameter set, a header parameter set, or alike.

The encoder may encode filtering parameters (e.g. filter coefficients) in or along the bitstream. The filtering parameters may be such that are to be used by a decoder for de-blurring and/or such that were used in the content preparation for blurring. For example, with reference to Figure 1, the values of w1 and w2 for weighted averaging may be encoded in or along the bitstream, or with reference to the description of Figure 2, the value of k may be encoded in or along the bitstream.

In the decoding process 340 a coded picture $C_{N,L}$ is decoded, which results into a reconstructed picture $P_{N,L}$.

The decoder may decode control signals from or along the bitstream for executing the deblurring filtering 344 and for the storage of deblurred pictures as reference frames, which may be considered to be a part of the decoded picture buffering 348. The control signals may be decoded jointly, e.g. from a single syntax element, or separately, e.g. from a first syntax element for executing the deblurring filtering and a second syntax element for storing the generated picture as a reference picture. The control signals may be decoded from the bitstream either on a sequence basis, e.g. from a sequence parameter set, or on picture basis, e.g. from a picture header, a tile group header, a slice header, a picture parameter set, a header parameter set, or alike.

The decoder may decode filtering parameters (e.g. filter coefficients from or along the bitstream). The filtering parameters may be such that are used by a decoder for de-blurring 344 and/or such that were used in the content preparation for blurring at the encoder. In the latter case, the decoder may conclude filtering parameters to be used for de-blurring from the decoded filtering parameters.

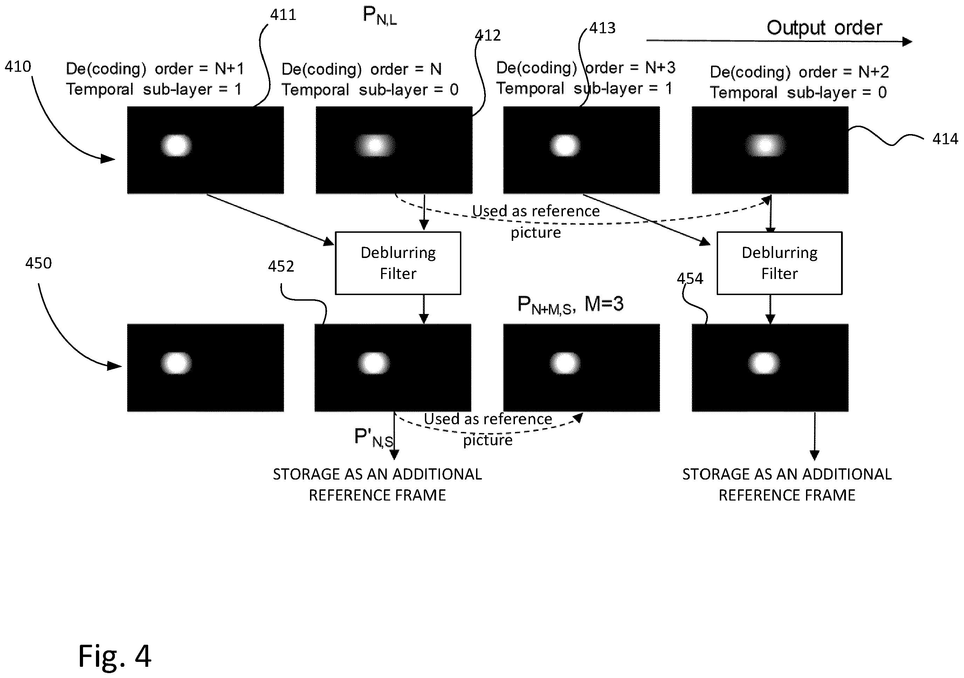

Referring to Figure 4, a picture $P'_{N,S}$ with the short effective exposure time is generated from at least a decoded picture with the long effective exposure *time* $P_{N,L}$. The generating may be regarded as deblurring filtering operation. In one embodiment, both frames 411 and 412 may be input to a deblurring filter, which generates a deblurred frame $P'_{N,S}$ based on the input frames. Frame 412 may be the $N^{th}$ frame in decoding order and it may belong to temporal sub-layer 0 comprising long effective exposure time frames. Frame 411 may be the $(N+1)^{th}$ frame in decoding order and it may belong to temporal sub-layer 1 comprising a sequence of short effective exposure time frames.

The generated picture $P'_{N,S}$ is used as reference picture in a prediction process for at least one subsequent picture in (de)coding order, e.g. $P_{N+M, S}$.

In an embodiment, the decoder outputs 360 reconstructed and generated pictures with the short effective exposure time and omits the output of the reconstructed pictures with a long effective exposure time.

Encoding and decoding according to the embodiments can be illustrated further with reference to Figure 4. More details are described below separately for encoding and decoding.

The encoding according to the embodiments is illustrated further with reference to Figure 4. A picture sequence with multiple effective exposure times 130 has been generated e.g. as illustrated in and described with reference to Figure 1. The picture sequence 130 is given as input for encoding. Pictures that have the long effective exposure time are encoded into temporal sub-layer 0, and pictures having the short effective exposure time are encoded into temporal sub-layer 1. The encoder outputs the encoded pictures (forming an encoded multiple effective exposure time stream) and reconstructs a picture sequence 410 with multiple effective exposure times. In the encoding, a reconstructed frame 412 can be used as a reference for predicting frame 414. Frame 412 may be the $N^{th}$ frame in decoding order and frame 414 may a subsequent frame, for example frame $N+2$, in decoding order. In the embodiment of Figure 4, two pictures, either 411, 412 or 413, 414, are used as input of the deblurring filter. The output of the deblurring filter $P'_{N,S}$ may be stored as an additional reference frame for predicting at least one subsequent frame, for example frame $P_{N+M,S}$, where M=3 in one example.

The decoding according to the embodiments is illustrated further with reference to Figure 4. In the example of Figure 4, pictures that have the long effective exposure time have been encoded into temporal sublayer 0, and pictures having the short effective exposure time have been encoded into temporal sub-layer 1. Such an encoded multiple effective exposure time stream is input to a decoder. The decoder decodes an encoded frame into a reconstructed frame 412, which can be used as a reference for predicting frame 414. Frame 412 may be the $N^{th}$ frame in decoding order and frame 414 may a subsequent frame, for example frame $N+2$ in decoding order. In the embodiment of Figure 4, two pictures, either 411, 412 or 413, 414, are used as input of the deblurring filter. The output of the deblurring filter $P'_{N,S}$ may be stored as an additional reference frame for at least one subsequent frame, for example frame $P_{N+M,S}$, where M=3 in one example.

The output 450 of the decoder comprises decoded frames, wherein the decoded frames 452, 454 of sub-layer 0 have been improved by reducing the blur, however, there is still delay of one picture interval in the output process, the delay being caused by the filtering process. Moreover, the deblurred picture (e.g. $N$) is not available for prediction of the immediately following picture of sub-layer 1 (e.g. $N+1$).

### Usage with hierarchical prediction

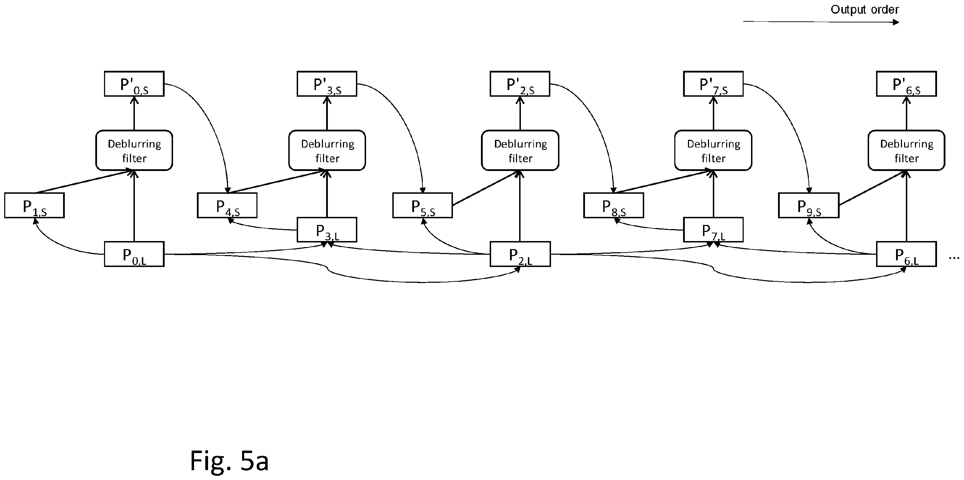

Figure 5a shows an example of applying the solution according to the embodiments to hierarchical inter prediction. Pictures $P_{0,L}$, $P_{2,L}$, $P_{3,L}$, $P_{6,L}$, $P_{7,L}$ and so on may reside in temporal sub-layer 0. Pictures $P_{1,S}$, $P_{4,S}$, $P_{5,S}$, $P_{8,S}$, $P_{9,s}$, and so on may reside in temporal sub-layer 1, Picture $P_{0,L}$ may be an intra-coded random access point picture, such as an IRAP picture in HEVC or alike. Arrows with an arrow head indicate that a picture at the source of the arrow may be used as reference for inter prediction of the picture pointed by the arrow. It is noted that the depicted arrows are just one example and there may be fewer or more arrows in similar embodiments. When both input picture for deblurring filtering have been reconstructed, pictures $P'_{0,S}$, $P'_{2,S}$, $P'_{3,S}$, $P'_{6,S}$, $P'_{7,S}$ and so on may be generated using a deblurring filter. Pictures $P'_{0,S}$, $P'_{2,S}$, $P'_{3,S}$, $P'_{6,S}$, $P'_{7,S}$ and so on may be used as reference picture for prediction for one or more subsequent pictures in (de)coding order.

More than two effective exposure times

The present embodiments are not limited to two effective exposure times. In the following, an embodiment with three effective exposure times is described, but it is appreciated that the present solution is not limited to three effective exposure times either.
The three effective exposure times may be the following:

- Short (S), suitable for one picture interval;
- Middle (M), suitable for two picture intervals;
- Long (L), suitable for four picture intervals.

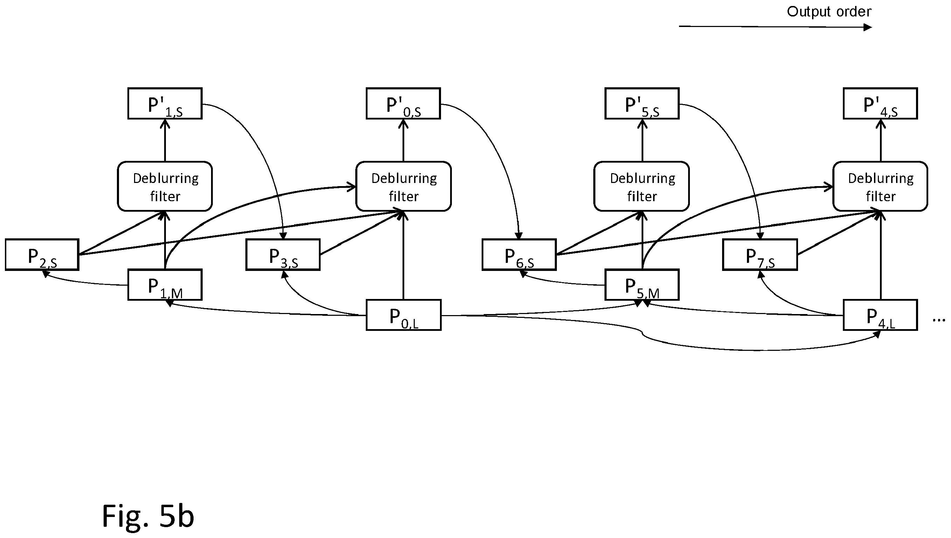

Figure 5b illustrates an example of applying the present solution to hierarchical inter prediction with three effective exposure times.
Picture may be coded into and/or decoded from temporal sub-layers as follows:

- Pictures $P_{0,L}$, $P_{4,L}$, and so on may reside in temporal sub-layer 0.
- Pictures $P_{1,M}$, $P_{5,M}$, and so on may reside in temporal sub-layer 1.
- Pictures $P_{2,S}$, $P_{3,S}$, $P_{6,S}$, $P_{7,S}$, and so on may reside in temporal sub-layer 2.

It is appreciated that this embodiment can be realized by other assignments of pictures to temporal sub-layers. For example, all pictures may reside in the same temporal sub-layer. In another example, two sub-layers may be used by combining any two consecutive sub-layers in the division above to one sub-layer.
Picture $P_{0,L}$, may be intra-coded random access point picture, such as an IRAP picture in HEVC or alike.
Arrows with an arrow head indicate that a picture at the source of the arrow may be used as a reference for inter prediction of the picture pointed to by the arrow. It is noted that the depicted arrows are just one example and there may be fewer or more arrows in similar embodiments.
When all input pictures for deblurring filtering have been reconstructed, pictures $P'_{0,S}$, $P'_{1,S}$, $P'_{4,S}$, $P'_{5,S}$, and so on may be generated using a deblurring filter. Pictures $P'_{0,S}$, $P'_{1,S}$, $P'_{4,S}$, $P'_{5,S}$ and so on may be used as reference picture for prediction for one or more subsequent pictures in (de)coding order. It is noted that the deblurring filtering for reconstructed pictures with long effective exposure times may take more than two reconstructed pictures as input, e.g. four reconstructed pictures as illustrated in the Figure 5b.

Avoiding the delay in deblurring filtering

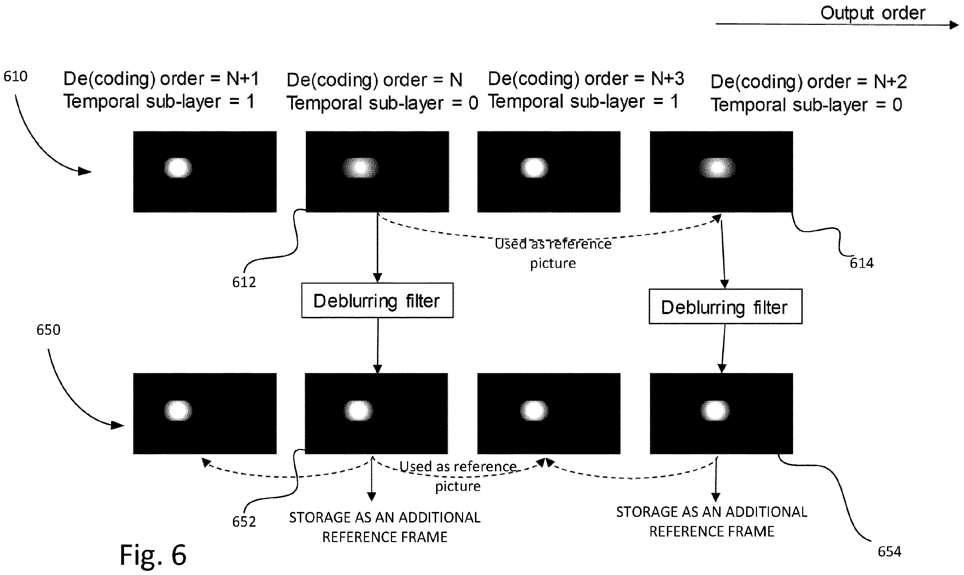

As discussed, the filtering process of embodiment of Figure 4 causes delay in the output process. Figure 6 illustrates an embodiment similar to the embodiment of Figure 4, but for avoiding the delay. A picture sequence with multiple effective exposure times 130 has been generated e.g. as illustrated in and described with reference to Figure 1. In Figure 6 a picture sequence 130 is input to an encoder, which encodes the picture sequence and as part of encoding generates a sequence of reconstructed pictures 610. Similarly, a decoder decodes the encoded pictures into a sequence of reconstructed pictures 610. However, instead of using two pictures as input for the deblurring filter, in this embodiment only the current picture 612, with the long effective exposure time is used as input for the deblurring filter in the encoder and in the decoder. The filter may be, for example, an Adaptive Loop Filter (ALF) (e.g. from H.266) or alike, or a neural network based deblurring filter. The output frame 652 of the deblurring filter may be stored as reference frame for predicting one or more subsequent frames in (de)coding order. In one embodiment, deblurred frame 652 may be used as reference frame for prediction of any frame that is subsequent to frame 652 in (de)coding order but precedes frame 652 in output order. In addition, deblurred frame 652 may be used as reference frame for prediction of any frame that is subsequent to frame 652 in both (de)coding and output order. In general, a plurality of deblurred reference frames may be used in prediction of a frame that is subsequent to the plurality of deblurred frames in (de)coding order. The predicted frame may precede one or more of the plurality of deblurred reference frames in output order.
The encoder may optimize the filter parameters in the deblurring filter e.g. by minimizing the error (e.g. mean squared error or mean absolute error) between the deblurred reconstructed image 652, 654 and the respective original image. The filter parameters can then be encoded in or along the bitstream.
By means of the present embodiment, shown in Figure 6, in the output 650 of the decoder the decoded frames 652, 654 of sub-layer 0 are deblurred, and there is no delay of one frame interval in the output process. Moreover, the deblurred picture (e.g. $N$) is available for prediction of the immediately following picture, in decoding order (e.g. $N+1$).

Neural network based deblurring with online learning

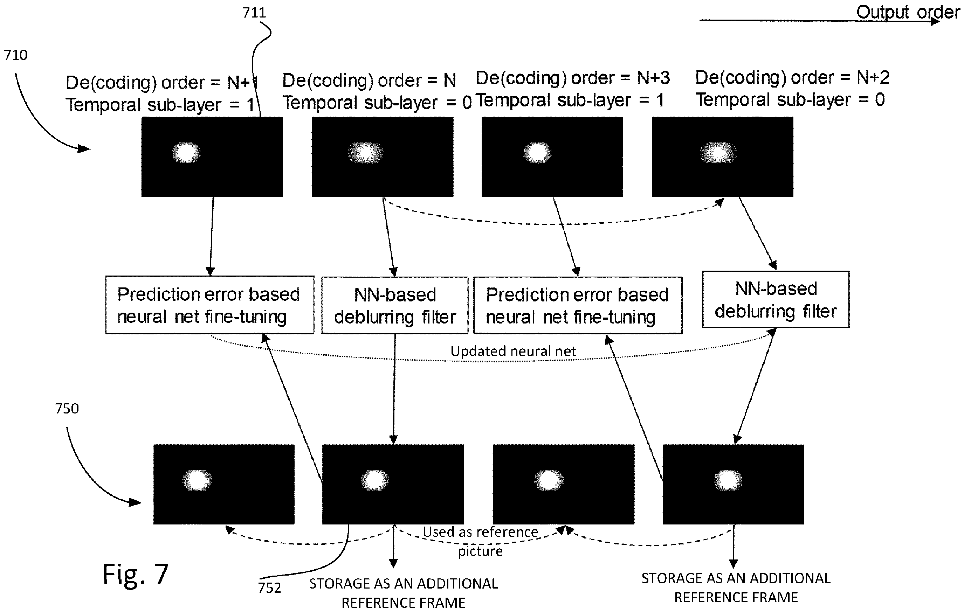

Deblurring filtering may be implemented by the inference stage of a neural network. Additionally, the neural network used for deblurring filtering can be fine-tuned with online learning according to an embodiment which is illustrated in Figure 7. A picture sequence with multiple effective exposure times 130 has been generated e.g. as illustrated in and described with reference to Figure 1. A picture sequence 130 is input to an encoder, which encodes the picture sequence and as part of encoding generates a sequence of reconstructed pictures 710. Similarly, a decoder decodes the encoded pictures into a sequence of reconstructed pictures 710. A reconstructed picture with long effective exposure time (e.g. with decoding order *N* or *N+2*) can be (not required to be) used as an input to the neural network (NN) -based deblurring filter.

The embodiment of Figure 7 may operate similarly to other embodiments, shown in Figures 4 and 6, except that the neural network used for deblurring is fine-tuned in the (de)coding loop by determining a prediction error between a picture 711 with a short effective exposure time and a deblurred picture 752 for computing the training signal. The prediction error may be derived for a subset of blocks of picture 711, such as those blocks of picture 711 for which a block from the generated picture $P'_{N,S}$ is used as reference for prediction.

By means of the present embodiment, the decoded frames of sub-layer 0 are deblurred, and there is no delay of one frame interval in the output process. Moreover, the deblurred picture (e.g. *N*) is available for prediction of the immediately following picture, in decoding order (e.g. *N+1*). There is no need to transmit the filtering parameters per picture because of the online learning process. Similar to Figure 6, the deblurred reference frame may be stored and used in prediction of one or more subsequent frame in decoding order, some of which may precede frame 752 in output order.

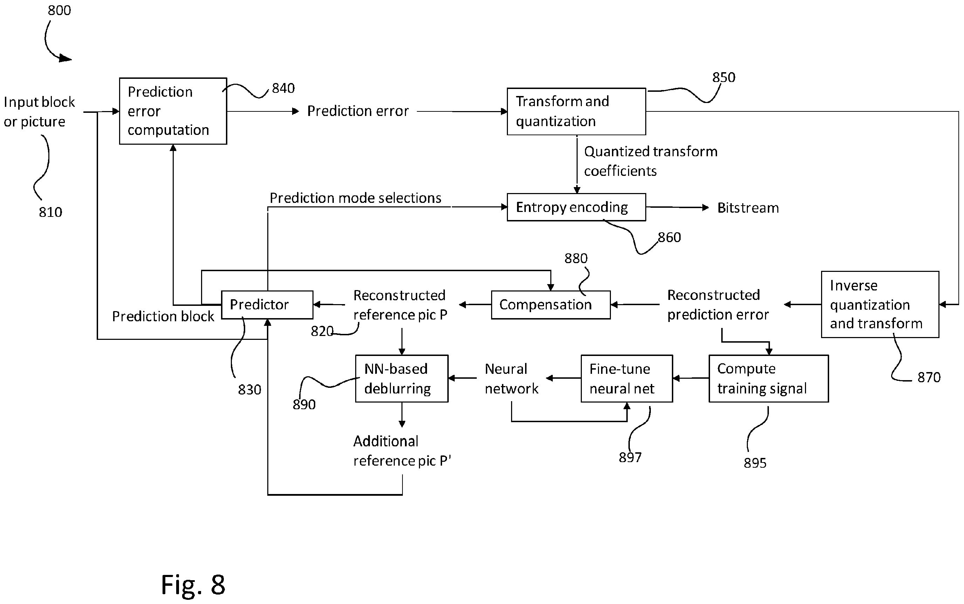

Figure 8 illustrates the encoding method according to the embodiment of Figure 7 for neural network based deblurring with online learning. An apparatus 800 for encoding, later referred to as "an encoder", may comprise the elements shown in Figure 8. The encoder 800 comprises at least one type of a predictor 830 and a prediction error encoder 850.

A predictor 830 shown in Figure 8 takes as input:

- The uncompressed input block 810 to be encoded;
- The reference block(s) 820 of reconstructed reference picture(s) *P* and/or generated (additional) reference picture(s) *P'*. Picture(s) *P* and/or *P'* comprise blocks of the same picture that is currently being encoded and/or of earlier pictures in (de)coding order.

The predictor 830 may for example perform intra prediction and/or inter prediction.

Based on the inputs, the predictor 830 outputs:

- A prediction block;
- Prediction mode selections, such as intra prediction mode, indication of which reference picture is used for inter prediction, and/or motion vector for inter prediction.

The prediction error computation 840 takes as input the input block 810 and the prediction block originating from the predictor 830, and computes their difference, which may be referred to as the prediction error or the prediction error block 840.

The prediction error may be encoded in the prediction error encoder 850. Prediction error coding 850 can be implemented by applying a transform, such as the discrete cosine transform, and quantize the transform coefficients. However, the embodiments are not limited to this type of prediction error coding only, even though this has been shown in the Figure.

An encoded representation of the prediction error, such as the quantized transform coefficients, may be encoded by the entropy encoder 860, for example using the context-adaptive binary arithmetic coding (CABAC), into a bitstream.

A reconstructed prediction error may be derived. For example, the quantized transform coefficients may be inverse-quantized and inverse-transformed in an inverse quantization and transform unit 870 to form a reconstructed prediction error block.

In the compensation process 880, the reconstructed prediction error block may be sample-wise summed up with the prediction block from the predictor 830 to form a reconstructed reference block. The compensation process 880 may also comprise additional operations, such as filtering, e.g. deblocking loop filtering. The reconstructed reference block may be stored as a part of a reconstructed reference picture to be used as input for subsequent predictions.

A reconstructed reference block of the reconstructed reference picture $P_{N,L}$ (for any values of N) or an entire reconstructed reference picture $P_{N,L}$ may be used as input for NN-based deblurring 890. When a block is filtered at a time, the deblurred block can be stored as part of a generated reference picture $P'_{N,L}$. When a picture is filtered, the filtering results into a generated reference picture $P'_{N,L}$. The predictor may use the generated reference picture $P'_{N,L}$ as reference for prediction.

An initial version of the neural network can be pre-defined or shared between the encoder and the decoder. For example, the initial parameters or weights for the neural network may be defined in a video/image coding standard. In another example, the initial parameters or weights are coded and transmitted in or along the video/image bitstream.

When a block from the generated picture $P'_{N,S}$ *may* be used for prediction for a picture with a short effective exposure time, the reconstructed prediction error from the inverse quantization and transform 870 may be used to compute a training signal 895 for further fine-tuning 897 the neural network in an online learning mode. More specifically, the reconstructed prediction error from the inverse quantization and transform 870 may be used as the loss information for computing the gradients of the neural network. The parameters or weights for the neural network updated by the further training may be used for deriving subsequent prediction blocks. The neural network therefore adapts to the content.

According to an embodiment, the training signal may comprise the gradients of the reconstructed prediction error with respect to the weights of the neural network. The gradients may be obtained by back-propagation algorithm or by policy gradient methods, or by any other suitable method.

The gradient of the loss may be defined with regard to the network's weights.

The weight update may be defined as a simple gradient (as in Stochastic Gradient Descent) or a weight update derived from the gradient by an optimization routine such as Adam, RMSprop, etc.

According to an embodiment, the retraining comprises applying a weight update obtained on the basis of the training signal to the current weights of the neural network. The new weights obtained through the update procedure may be defined, e.g. as $new\_weights = old\_weights - learning\_rate * weight\_update$, where $new\_weights$ are the updated weights, $old\_weights$ are the weights before the update, and learning rate is a hyper-parameter defined manually by a human or automatically for example by grid search or by a neural network driven search.

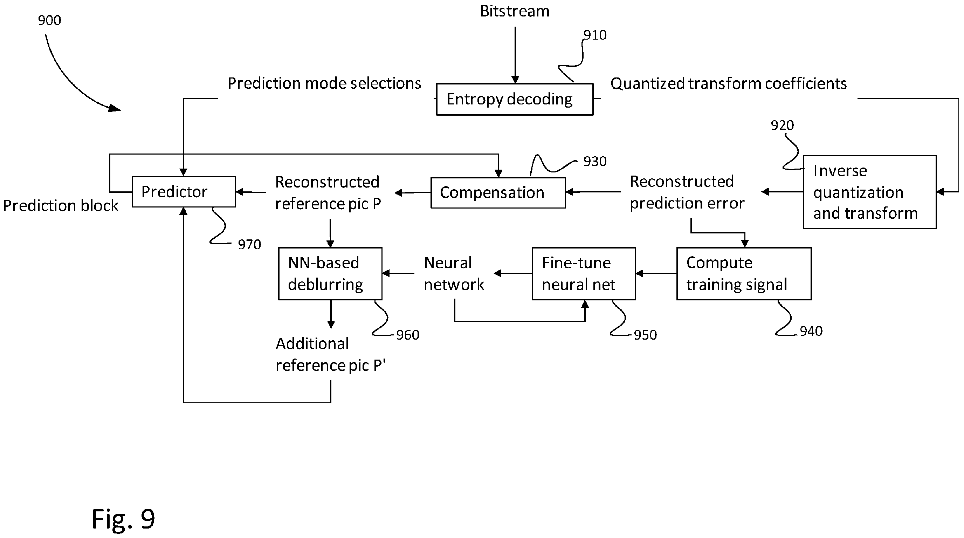

Figure 9 illustrates a decoding method according to an embodiment. A video decoder 900 according to an aspect of the invention comprises partly similar units as the video encoder (Fig. 8; 800), and at least some of the similar units operate identically to the corresponding units in the video encoder.

In the video decoder 900 of Figure 9, the coding parameters for an encoded version of the prediction error are entropy-decoded 910 from the bitstream. For example, the quantized transform coefficients may be entropy-decoded from the bitstream.

The inverse quantization and transform unit 920 (i.e., generally the prediction error decoding), generating the reconstructed prediction error, and the compensation process 930 may be respectively identical to those in the encoder. Likewise, the processes of computing the training signal 940 and fine-tuning 950 the neural network may be respectively identical to those in the encoder. Consequently, the encoder and the decoder fine-tune the neural network identically. Furthermore, the NN-based deblurring 960 may be identical to that in the encoder.

Blocks to be output may be selected as follows:

- if a reconstructed reference block is a part of a reconstructed picture with short effective exposure time (i.e. $P_{N,S}$ with any value of $N$), the reconstructed reference block may be also used as the output of the decoder.
- Otherwise, if the reconstructed reference block is a part of a reconstructed picture with long effective exposure time (i.e. $P_{N,SL}$ with any value of $N$) and coded pictures and no pictures with short effective exposure time are output (e.g. no pictures a temporal sublayer 1 are output), the reconstructed reference block may be used as the output of the decoder.
- Otherwise (the reconstructed reference block is a part of a reconstructed picture with long effective exposure time and coded pictures and pictures with short effective exposure time are output), the generated reference block (belonging to $P'_{N,S}$) may be used as output of the decoder.

It is appreciated that rather than individual blocks, entire pictures P or P' may be output. Blocks or pictures to be output may be further processed e.g. by filtering (e.g. deblocking filtering). Pictures to be output may be further processed by cropping.

The predictor 970 in the decoder 900 obtains mode selections from the entropy decoder 910 (and may not comprise a search for prediction mode parameters, like the encoder-side predictor may have). Otherwise, the predictor 970 operates similarly to that in the encoder (Fig. 8; 830), i.e. produces prediction blocks based on the reconstructed reference picture(s) P and/or generated reference picture(s) P'.

Herein, it is appreciated that term "decoder" covers any operational unit capable of carry out the decoding operations, such as a player, a receiver, a gateway, a demultiplexer and/or a decoder.

Further embodiments of the present solution comprise at least the following:

- Indicating invocation of the deblur filtering by the encoder, and decoding invocation of the deblur filtering by the decoder
- Indicating relation between temporal sub-layers and effective exposure times;
- Reference picture list initialization;
- Reference picture marking.
- Decoder output process.

Any one or more of these embodiments can be combined with the embodiments discussed above. These embodiments are discussed next.

Invocation of the deblur filtering

Decoders may apply the deblur filtering conditionally: When pictures to be decoded have the same effective exposure time, the decoder may not perform deblur filtering. For example, if pictures having a long effective exposure time are all present in certain first temporal sub-layer(s) (e.g. temporal sub-layer 0) and pictures having a short effective exposure time are all present in certain second temporal sub-layer(s) (e.g. temporal sub-layer 1) and only the first temporal sub-layer(s) are decoded, the decoder should not apply deblur filtering. When pictures to be decoded have multiple effective exposure times, deblur filtering is performed for selected reconstructed pictures. Related embodiments are described next.

According to an embodiment, a filter invocation indication is encoded in the bitstream. The filter invocation indication may include but is not limited to one or more of the following:

- A syntax element or a syntax structure included in a parameter set, such as sequence parameter set, picture parameter set, and/or header parameter set. The filter invocation indication may pertain to the same pictures for which the containing parameter set is active.

- A syntax element or a syntax structure included in a header structure, such as sequence header, picture header, or a header of an image segment, such as slice, tile, or tile group. The filter indication invocation may pertain to the same scope as the containing header.

- A syntax element or a syntax structure included in a VCL NAL unit. The filter indication invocation may pertain to the VCL NAL unit.

- A filter invocation syntax structure or data unit, such as a filter invocation NAL unit. The persistence scope of the data unit may be pre-defined and/or indicated e.g. within the data unit or its header, such as the NAL unit header of the filter invocation NAL unit. For example, the data unit may be specified to pertain to the indicated sub-layer (e.g. through the NAL unit header of the filter invocation NAL unit) for the entire coded video sequence, or a portion of the coded video sequence, for example until the end of the coded video sequence. In another example, the data unit may be specified to pertain to the indicated sub-layer and to the access unit wherein the data unit appears.

If the filter invocation indication pertains to multiple pictures, such as for example an entire coded video sequence, the filter invocation indication may be specific to only certain pictures within the persistence scope that are concluded e.g. based on sub-layer identifiers.

According to an embodiment, the filter invocation indication is indicated in the bitstream to belong to a certain sub-layer. The encoder may indicate the filter invocation indication to belong to a certain sub-layer for example through, but not limited to, one or more of the following:

- A sub-layer identifier syntax element in the NAL unit header, such as temporal_id_plus1 in HEVC, of the NAL unit containing the filter invocation indication (e.g. the filter invocation indication NAL unit).

- A sub-layer identifier syntax element included in the filter invocation indication.

According to an embodiment, the encoder encodes filtering parameters in a syntax structure of the filter invocation indication. The filtering parameters may for example comprise or be indicative of, but are not limited to, one or more of the following:

- the type of the filter (e.g. ALF or a particular neural network);
- the number of filter taps of the filter;
- the coefficient values of the filter taps.

According to an embodiment, a filter invocation indication is decoded from the bitstream.

According to an embodiment, a persistence scope for the decoded filter invocation indication is concluded. The persistence scope may be concluded as described above in relation to different options for filter invocation indications in the bitstream.

If the filter invocation indication pertains to multiple pictures, such as for example an entire coded video sequence, the filter invocation indication may be concluded to be specific to only certain pictures within the persistence scope e.g. based on sub-layer identifiers.

According to an embodiment, the filter invocation indication is decoded from the bitstream to belong to a certain sub-layer. The decoder may conclude the filter invocation indication to belong to a certain sub-layer for example through, but not limited to, one or more of the following:

- A sub-layer identifier syntax element in the NAL unit header, such as temporal_id_plus1 in HEVC, of the NAL unit containing the filter invocation indication (e.g. the filter invocation indication NAL unit).

- A sub-layer identifier syntax element included in the filter invocation indication.

According to an embodiment, a decoder is configured to operate on a certain highest temporal sub-layer, e.g. through an interface to the decoder. The decoder may carry out a sub-bitstream extraction to exclude data units that only apply to temporal sub-layers higher than the given highest temporal sub-layer. Alternatively, similar sub-bitstream extraction may be performed prior to decoding, and the resulting bitstream may be provided as input to the decoder.

According to an embodiment, the decoder decodes filtering parameters from a syntax structure of the filter invocation indication.

According to the embodiment, the decoder performs one or more of the following actions in response to decoding the filter invocation indication:

- The filtering of the inferred or indicated type is performed for the reconstructed pictures that are concluded to be within the persistence scope of the filter invocation indication. The filter may take as input also other reconstructed pictures than those indicated to be within the persistence scope. For example, the reconstructed pictures with short effective exposure times are input to the filter in some embodiments.

- The picture generated by the filtering is stored in the decoded picture buffer and reference picture marking for it is applied as described in an embodiment further below.

Indicating relation between temporal sub-layers and effective exposure times

According to an embodiment, an encoder encodes in or along the bitstream and/or a decoder decodes from or along the bitstream one or more of the following:

- Indication that reconstructed pictures at the same temporal sub-layer have exactly or essentially the same effective exposure time.
- Syntax element(s) indicating the effective exposure time for one or more indicated or inferred temporal sub-layers.
- Indication that a reconstructed picture at a temporal sub-layer $M$ has an effective exposure time that is proportional to the sum of effective exposure times of those reconstructed pictures at temporal sub-layer $N,$ for all values of $N$ greater than $M$, that precede the next reconstructed picture at a temporal sub-layer equal to or less than $M$ in output order.
- Indication that a reconstructed picture at a temporal sub-layer $M$ has an effective exposure time that is proportional to the sum of effective exposure times of those reconstructed pictures at temporal sub-layer $N,$ for all values of $N$ greater than $M$, that succeed the previous reconstructed picture at a temporal sub-layer equal to or less than $M$ in output order.

According to an embodiment, a generated picture $P'$ at a particular effective exposure time is assigned (in the encoder and/or in the decoder) a temporal sub-layer value that is equal to the temporal sub-layer value of the reconstructed picture with the same particular effective exposure time. Consequently, generated reference pictures at sub-layer $N$, e.g. with a short effective exposure time, is not included in the reference picture lists of pictures at sub-layer $M$ (where $M < N),$ e.g. with a long effective exposure time.

According to an embodiment, a generated picture $P'$ is assigned a temporal sub-layer value that is equal to the sub-layer value of the filter invocation indication based on which the generated picture was generated. For example, if a filter invocation indication NAL unit is used and the NAL unit header is indicative of the temporal sub-layer identifier of the NAL unit, the same temporal sub-layer identifier value is assigned to the generated picture.

Reference picture list initialization

A reference picture list initialization process in encoding and/or decoding may comprise including only reconstructed and generated reference pictures having the same or similar effective exposure time as the picture being encoded or decoded, respectively, in the initial reference picture list(s). For example, reconstructed pictures with long effective exposure time $P_{N,L}$ for any value of $N$ are excluded from initial reference picture lists of pictures with short effective exposure time and generated pictures $P'_{N,S}$ for any value of $N$ are included in initial reference picture lists of pictures with short effective exposure time.

According to an embodiment, the reference picture list initialization process in encoding and/or decoding comprises including reconstructed and generated reference pictures having the same or similar effective exposure time as the picture being encoded or decoded, respectively, in the initial reference picture list(s) before other reconstructed or generated reference pictures.

A reference picture list initialization process in encoding and/or decoding may comprise including generated reference pictures in the same or lower temporal sub-layer as the picture being encoded or decoded, respectively, in the initial reference picture list(s) and not including other generated reference pictures in the initial reference picture list(s). For example, if a generated reference picture has been assigned (in the encoder and/or in the decoder) a temporal sub-layer value equal to $N,$ the generated reference picture may be included in the initial reference picture list(s) for pictures at temporal sub-layer $N$ or greater. Assigning a temporal sub-layer to a generated reference picture may be performed as described above in another embodiment.

Reference picture marking

The generated (i.e. additional) reference picture may be paired with the corresponding "source" reference picture in its marking as "used for reference" or "unused for reference" (e.g. in a reference picture set). I.e., when a "source" reference picture is marked as "unused for reference", the corresponding additional reference picture is also marked as "unused for reference". Consequently, indicating the reference picture marking for generated pictures does not require additional syntax or spend additional bits. Based on the reference picture marking a decoder may determine whether to store and/or use the particular picture as a reference picture in decoding.

An embodiment, where pictures of long effective exposure time are in a different temporal sub-layer (e.g. sub-layer 0) than pictures of short effective exposure time (residing e.g. in sub-layer 1) is described next by referring to sub-layers 0 and 1 without loss of generality (i.e. any other sub-layers can likewise be used). When a picture with an indicated picture order count (POC) is marked as unused for reference by a picture at sub-layer 1 (e.g. by excluding the reference picture from a reference picture set by the picture at sub-layer 1) and the picture with the indicated POC is coded at sub-layer 0, only the respective generated reference picture is marked as unused for reference. When a picture with an indicated picture order count (POC) is marked as unused for reference by a picture at sub-layer 0 (e.g. by excluding the reference picture from a reference picture set by the picture at sub-layer 1), both the indicated reference picture and the respective generated reference picture, if any, are marked as unused for reference.

In an embodiment, the generated (i.e. additional) reference frame is specifically marked as "used for reference" or "unused for reference". For example, reference picture set syntax may include an indication of temporal sub-layer identifier.

Decoder output

According to an embodiment, the output process of a decoder outputs a single picture per time instance or access unit. If there are multiple reconstructed or generated pictures per time instance or access unit, the output process selects one of them to be output. In an embodiment, reconstructed and generated pictures are assigned to sub-layers as described in other embodiments, and the reconstructed or generated picture on the highest sub-layer is output for any particular time instance or access unit.

The previous paragraphs disclose the deblurring filtering according to several embodiments. It needs to be understood that while embodiments are described in a manner that preceding reconstructed picture(s), in output order, are used as input to deblurring a current picture, embodiments can be similarly realized by using subsequent picture(s) in output order. Similarly, in the pre-processing before encoding, embodiments can be realized by using picture(s) subsequent to a current picture as input to the blurring. Finally, it is appreciated that the embodiments are combinable unless it has been said that they are alternatives.

Some embodiments have been described with reference to the term frame. It needs to be understood that embodiments could be similarly realized with reference to the term picture or to the term field instead.

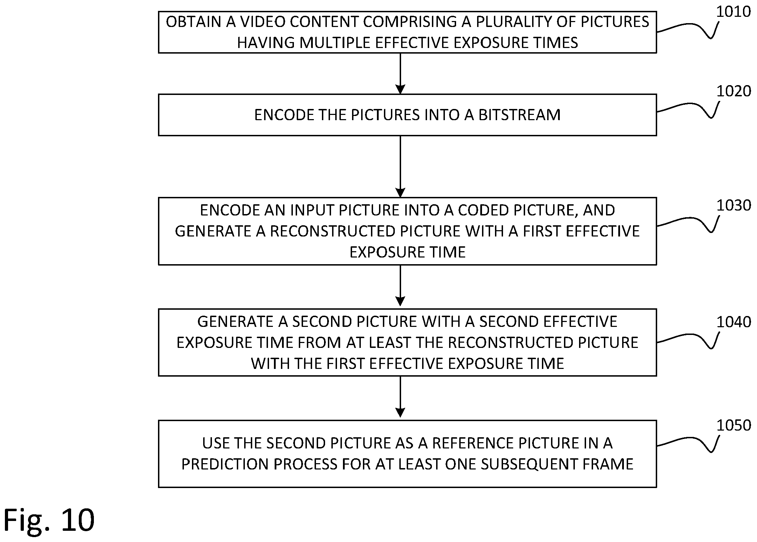

Fig. 10 is a flowchart illustrating a method according to an embodiment. A method comprises obtaining 1010 a video content comprising a plurality of pictures having multiple effective exposure times; encoding 1020 the pictures into a bitstream; the encoding comprising

- encoding 1030 an input picture into a coded picture, and generating, for example during the encoding, a reconstructed picture with a first effective exposure time;
- generating 1040 a second picture with a second effective exposure time from at least the reconstructed picture with the first effective exposure time;
- using 1050 the second picture as a reference picture in a prediction process for at least one subsequent frame.

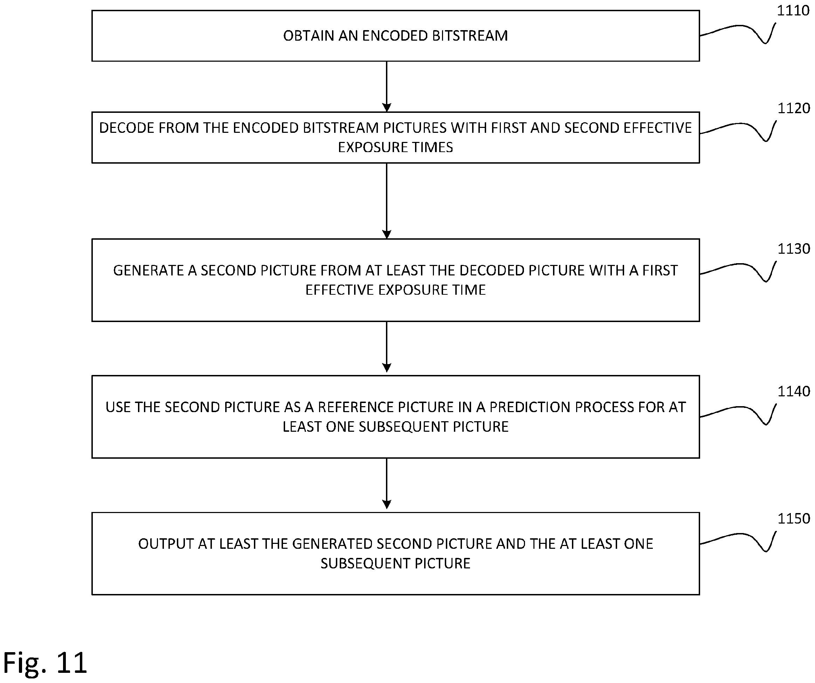

Fig. 11 is a flowchart illustrating a method according to an embodiment. A method comprises obtaining 1110 an encoded bitstream; decoding 1120 from the encoded bitstream pictures with first and second effective exposure times; generating 1130 a second picture from at least the decoded picture with a first effective exposure time; using 1140 the second picture as a reference picture in a prediction process for at least one subsequent picture; and outputting 1150 at least the generated second picture and the at least one subsequent picture.

An apparatus according to an embodiment comprises means for obtaining a video content comprising a plurality of pictures having multiple effective exposure times; means for encoding the pictures into a bitstream; wherein the means for encoding comprising

- means for encoding an input picture into a coded picture, and during encoding generating a reconstructed picture with a first effective exposure time;
- means for generating a second picture with a second effective exposure time from at least the reconstructed picture with the first effective exposure time;
- means for using the second picture as a reference picture in a prediction process for at least one subsequent frame.

The means may comprise at least one processor, and a memory including a computer program code, wherein the processor may further comprise processor circuitry. The memory and the computer program code are configured to, with the at least one processor, cause the apparatus to perform at least the method of flowchart of Figure 10.

An apparatus according to another embodiment comprises means for obtaining an encoded bitstream; means for decoding from the encoded bitstream pictures with first and second effective exposure times; means for generating a second picture from at least the decoded picture with a first effective exposure time; means for using the second picture as a reference picture in a prediction process for at least one subsequent picture; and means for outputting at least the generated second picture and the at least one subsequent picture. The means comprises at least one processor, and a memory including a computer program code, wherein the processor may further comprise processor circuitry. The memory and the computer program code are configured to, with the at least one processor, cause the apparatus to perform at least the method of flowchart of Figure 11.

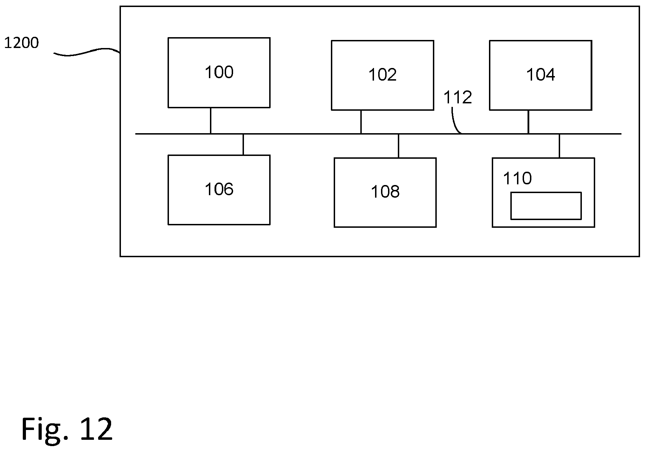

An example of an apparatus 1200, e.g. an apparatus for encoding and/or decoding, is illustrated in Figure 12. The generalized structure of the apparatus will be explained in accordance with the functional blocks of the system. Several functionalities can be carried out with a single physical device, e.g. all calculation procedures can be performed in a single processor if desired. A data processing system of an apparatus according to an example of Figure 12 comprises a main processing unit 100, a memory 102, a storage device 104, an input device 106, an output device 108, and a graphics subsystem 110, which are all connected to each other via a data bus 112.

The main processing unit 100 is a conventional processing unit arranged to process data within the data processing system. The main processing unit 100 may comprise or be implemented as one or more processors or processor circuitry. The memory 102, the storage device 104, the input device 106, and the output device 108 may include conventional components as recognized by those skilled in the art. The memory 102 and storage device 104 store data in the data processing system 100. Computer program code resides in the memory 102 for implementing, for example, the methods according to embodiments. The input device 106 inputs data into the system while the output device 108 receives data from the data processing system and forwards the data, for example to a display. The data bus 112 is a conventional data bus and while shown as a single line it may be any combination of the following: a processor bus, a PCI bus, a graphical bus, an ISA bus. Accordingly, a skilled person readily recognizes that the apparatus may be any data processing device, such as a computer device, a personal computer, a server computer, a mobile phone, a smart phone or an Internet access device, for example Internet tablet computer.

The various embodiments can be implemented with the help of computer program code that resides in a memory and causes the relevant apparatuses to carry out the method. For example, a device may comprise circuitry and electronics for handling, receiving and transmitting data, computer program code in a memory, and a processor that, when running the computer program code, causes the device to carry out the features of an embodiment. Yet further, a network device like a server may comprise circuitry and electronics for handling, receiving and transmitting data, computer program code in a memory, and a processor that, when running the computer program code, causes the network device to carry out the features of an embodiment. The computer program code comprises one or more operational characteristics. Said operational characteristics are being defined through configuration by said computer based on the type of said processor, wherein a system is connectable to said processor by a bus, wherein a programmable operational characteristic of the system, according to an embodiment, comprises, according to an embodiment, obtaining a video content comprising a plurality of pictures having multiple effective exposure times; encoding the pictures into a bitstream; the encoding comprising encoding an input picture into a coded picture, and during encoding generating a reconstructed picture with a first effective exposure time; generating a second picture with a second effective exposure time from at least the reconstructed picture with the first effective exposure time; using the second picture as a reference picture in a prediction process for at least one subsequent frame. According to another embodiment, a programmable operational characteristic of the system comprises obtaining an encoded bitstream; decoding from the encoded bitstream pictures with first and second effective exposure times; generating a second picture from at least the decoded picture with a first effective exposure time; using the second picture as a reference picture in a prediction process for at least one subsequent picture; and outputting at least the generated second picture and the at least one subsequent picture.

If desired, the different functions discussed herein may be performed in a different order and/or concurrently with other. Furthermore, if desired, one or more of the above-described functions and embodiments may be optional or may be combined. For avoidance of doubt, terms "multiple" or "several" should be understood as "at least two". Decoding information from or along a bitstream may for example refer to receiving information in a predetermined or signaled location and/or format.

Although various aspects of the embodiments are set out in the independent claims, other aspects comprise other combinations of features from the described embodiments and/or the dependent claims with the features of the independent claims, and not solely the combinations explicitly set out in the claims.

It is also noted herein that while the above describes example embodiments, these descriptions should not be viewed in a limiting sense. Rather, there are several variations and modifications, which may be made without departing from the scope of the present disclosure as, defined in the appended claims.

## Claims

1. A method, comprising:

    - obtaining a video content comprising a plurality of pictures having multiple effective exposure times;
    - encoding the pictures into a bitstream; the encoding comprising

        - encoding pictures having a first effective exposure time at a first temporal sub-layer;
        - encoding pictures having a second effective exposure time at a second temporal sub-layer;

    - encoding into or along a bitstream a first indication on a relation between temporal sub-layers and the first and/or second effective exposure times.

2. The method according to claim 1, wherein the first indication comprises one or more of the following:

    - a second indication that pictures at the same temporal sub-layer have exactly or essentially the same effective exposure time;
    - syntax element(s) indicating the effective exposure time for one or more indicated or inferred temporal sub-layers;
    - a third indication that a picture at a temporal sublayer $M$ has an effective exposure time that is proportional to the sum of effective exposure times of those pictures at temporal sub-layer $N$, for all values of $N$ greater than $M$, that precede the next picture at a temporal sub-layer equal to or less than *M* in output order;
- a fourth indication that a picture at a temporal sub-layer *M* has an effective exposure time that is proportional to the sum of effective exposure times of those pictures at temporal sub-layer *N*, for all values of *N* greater than *M*, that succeed the previous picture at a temporal sub-layer to or less than *M* in output order.

3. The method according to claim 1, further comprising

- generating a reconstructed picture with a first effective exposure time from a picture at the first temporal sub-layer;
- generating a second picture with a second effective exposure time from at least the reconstructed picture with the first effective exposure time;
- using the second picture as a reference picture in a prediction process for at least one subsequent frame.

4. A method, comprising:

- obtaining an encoded bitstream;
- decoding from the encoded bitstream pictures having a first effective exposure time at a first temporal sub-layer;
- decoding from the encoded bitstream pictures having a second effective exposure time at a second temporal sub-layer;
- decoding from the encoded bitstream a first indication on a relation between temporal sub-layers and the first and/or the second effective exposure time.

5. An apparatus comprising:

- means for obtaining a video content comprising a plurality of pictures having multiple effective exposure times;
- means for encoding the pictures into a bitstream; wherein the means for encoding comprising

  - means for encoding pictures having a first effective exposure time at a first temporal sub-layer;
  - means for encoding picture having a second effective exposure time at a second temporal sub-layer;

- means for encoding into or along a bitstream a first indication on a relation between temporal sub-layers and the first and/or the second effective exposure times.

6. The apparatus according to claim 5, wherein the first indication comprises one or more of the following:

  - a second indication that pictures at the same temporal sub-layer have exactly or essentially the same effective exposure time;
  - syntax element(s) indicating the effective exposure time for one or more indicated or inferred temporal sub-layers;
  - a third indication that a picture at a temporal sublayer *M* has an effective exposure time that is proportional to the sum of effective exposure times of those pictures at temporal sub-layer *N*, for all values of *N* greater than *M*, that precede the next picture at a temporal sub-layer equal to or less than *M* in output order;
  - a fourth indication that a picture at a temporal sub-layer *M* has an effective exposure time that is proportional to the sum of effective exposure times of those pictures at temporal sub-layer *N*, for all values of *N* greater than *M*, that succeed the previous picture at a temporal sub-layer to or less than *M* in output order.

7. The apparatus according to claim 5, further comprising

  - means for generating a reconstructed picture with a first effective exposure time from a picture at the first temporal sub-layer;
  - means for generating a second picture with a second effective exposure time from at least the reconstructed picture with the first effective exposure time;
  - means for using the second picture as a reference picture in a prediction process for at least one subsequent frame.

8. An apparatus comprising:

  - means for obtaining an encoded bitstream;
  - means for decoding from the encoded bitstream pictures having a first effective exposure time at a first temporal sub-layer;
  - means for decoding from the encoded bitstream pictures having a second effective exposure time at a second temporal sub-layer;
  - means for decoding from the encoded bitstream a first indication on a relation between temporal sub-layers and the first and/or the second effective exposure time.

9. The apparatus according to claim 8, further comprising means for decoding from the bitstream a filter invocation indication.

10. The apparatus according to claim 9, further comprising means for concluding a persistence scope for the decoded filter invocation indication.

11. The apparatus according to claim 9 or 10, wherein the filter invocation indication is decoded from the bitstream to belong to a certain sub-layer.

12. The apparatus according to claim 11, further comprising means for assigning the second picture a temporal sub-layer value that is equal to a sub-layer value of the filter invocation indication based on which the generated picture was generated.

13. The apparatus according to any of the claims 8 to 12, wherein when the reference picture is marked as unused for reference, the apparatus comprises means for marking corresponding additional reference picture as unused for reference.

14. A computer program product comprising computer program code configured to, when executed on at least one processor, cause an apparatus or a system to implement a method according to any of the claims 1 to 4.

Fig. 1

$$F_0' = (F_{TSL1} - F_{-1}) * k + F_{TSL1}$$

$$F_0' = (F_{TSL1} - F_{-1}) * k + F_{TSL1}$$

*k = temporal_filter_w1/temporal_filter_w2.*

Fig. 2

310

video content

320

pre-processing

multiple effective
exposure times for
pictures

encoding

330

$P_{i,L}$   deblur filtering   $P'_{i,S}$   decoded picture
buffering

334                               338

decoding

340

$P_{i,L}$   deblur filtering   $P'_{i,S}$   decoded picture
buffering

$P_{i,S}$ and $P'_{i,S}$
interleaved   output

344                               348                   360

Fig. 3

24

411  $P_{N,L}$  412  413

410  De(coding) order = N+1
Temporal sub-layer = 1

De(coding) order = N
Temporal sub-layer = 0

De(coding) order = N+3
Temporal sub-layer = 1

De(coding) order = N+2
Temporal sub-layer = 0

414

Used as reference
picture

Deblurring
Filter

Deblurring
Filter

450

452

$P_{N+M,S}$, M=3

454

$P'_{N,S}$

Used as reference
picture

STORAGE AS AN ADDITIONAL
REFERENCE FRAME

STORAGE AS AN ADDITIONAL
REFERENCE FRAME

Fig. 4

EP 3 672 241 A1

Output order

$P'_{0,S}$    $P'_{3,S}$    $P'_{2,S}$    $P'_{7,S}$    $P'_{6,S}$

Deblurring filter    Deblurring filter    Deblurring filter    Deblurring filter    Deblurring filter

$P_{1,S}$    $P_{4,S}$    $P_{5,S}$    $P_{8,S}$    $P_{9,S}$

$P_{3,L}$    $P_{7,L}$

$P_{0,L}$    $P_{2,L}$    $P_{6,L}$  ...

Fig. 5a

EP 3 672 241 A1

Fig. 5b

Output order

De(coding) order = N+2
Temporal sub-layer = 0

614

De(coding) order = N+3
Temporal sub-layer = 1

De(coding) order = N
Temporal sub-layer = 0

De(coding) order = N+1
Temporal sub-layer = 1

Deblurring filter

Deblurring filter

Used as reference picture

Used as reference picture

STORAGE AS AN ADDITIONAL REFERENCE FRAME

STORAGE AS AN ADDITIONAL REFERENCE FRAME

654

652

612

610

650

Fig. 6

711

710

De(coding) order = N+1
Temporal sub-layer = 1

De(coding) order = N
Temporal sub-layer = 0

De(coding) order = N+3
Temporal sub-layer = 1

De(coding) order = N+2
Temporal sub-layer = 0

| Prediction error based neural net fine-tuning | NN-based deblurring filter | Prediction error based neural net fine-tuning | NN-based deblurring filter |

Updated neural net

750

**Fig. 7**

752

Used as reference picture

STORAGE AS AN ADDITIONAL REFERENCE FRAME

STORAGE AS AN ADDITIONAL REFERENCE FRAME

EP 3 672 241 A1

Fig. 8

Fig. 9

OBTAIN A VIDEO CONTENT COMPRISING A PLURALITY OF PICTURES HAVING MULTIPLE EFFECTIVE EXPOSURE TIMES — 1010

ENCODE THE PICTURES INTO A BITSTREAM — 1020

ENCODE AN INPUT PICTURE INTO A CODED PICTURE, AND GENERATE A RECONSTRUCTED PICTURE WITH A FIRST EFFECTIVE EXPOSURE TIME — 1030

GENERATE A SECOND PICTURE WITH A SECOND EFFECTIVE EXPOSURE TIME FROM AT LEAST THE RECONSTRUCTED PICTURE WITH THE FIRST EFFECTIVE EXPOSURE TIME — 1040

USE THE SECOND PICTURE AS A REFERENCE PICTURE IN A PREDICTION PROCESS FOR AT LEAST ONE SUBSEQUENT FRAME — 1050

Fig. 10

OBTAIN AN ENCODED BITSTREAM — 1110

DECODE FROM THE ENCODED BITSTREAM PICTURES WITH FIRST AND SECOND EFFECTIVE EXPOSURE TIMES — 1120

GENERATE A SECOND PICTURE FROM AT LEAST THE DECODED PICTURE WITH A FIRST EFFECTIVE EXPOSURE TIME — 1130

USE THE SECOND PICTURE AS A REFERENCE PICTURE IN A PREDICTION PROCESS FOR AT LEAST ONE SUBSEQUENT PICTURE — 1140

OUTPUT AT LEAST THE GENERATED SECOND PICTURE AND THE AT LEAST ONE SUBSEQUENT PICTURE — 1150

Fig. 11

Fig. 12

Europäisches
Patentamt
European
Patent Office
Office européen
des brevets

# EUROPEAN SEARCH REPORT

**Application Number**

EP 19 21 6362

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 346 710 A1 (SONY CORP [JP]) 11 July 2018 (2018-07-11) * paragraph [0061] - paragraph [0063]; figures 8b,10 * * paragraph [0059] - paragraph [0060] * * paragraph [0057] - paragraph [0058] * * paragraph [0050] - paragraph [0053] * ----- | 1-14 | INV. H04N19/117 H04N19/132 H04N19/136 H04N19/31 H04N19/46 H04N19/70 H04N19/80 |
| X | US 2016/234500 A1 (TSUKAGOSHI IKUO [JP]) 11 August 2016 (2016-08-11) * paragraph [0075] - paragraph [0077]; figure 5 * * paragraph [0079] * * paragraph [0090] - paragraph [0091] * ----- | 1-14 | |
| X,P | SEGALL (SHARPLABS) A ET AL: "On Frame Rate Support and Extraction in VVC", 13. JVET MEETING; 20190109 - 20190118; MARRAKECH; (THE JOINT VIDEO EXPLORATION TEAM OF ISO/IEC JTC1/SC29/WG11 AND ITU-T SG.16 ), , no. JVET-M0579 4 January 2019 (2019-01-04), XP030200668, Retrieved from the Internet: URL:http://phenix.int-evry.fr/jvet/doc_end _user/documents/13_Marrakech/wg11/JVET-M05 79-v1.zip JVET-M0579.docx [retrieved on 2019-01-04] * the whole document * ----- | 1-14 | **TECHNICAL FIELDS SEARCHED (IPC)** H04N |

The present search report has been drawn up for all claims

| Place of search | Date of completion of the search | Examiner |
|---|---|---|
| Munich | 5 March 2020 | Schoeyer, Marnix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 21 6362

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-2020

| Patent document cited in search report | | | Publication date | Patent family member(s) | | | Publication date |
|---|---|---|---|---|---|---|---|
| EP 3346710 | A1 | | 11-07-2018 | AU | 2016317252 | A1 | 15-02-2018 |
| | | | | CA | 2996279 | A1 | 09-03-2017 |
| | | | | CN | 107925766 | A | 17-04-2018 |
| | | | | EP | 3346710 | A1 | 11-07-2018 |
| | | | | JP | WO2017038800 | A1 | 14-06-2018 |
| | | | | KR | 20180044902 | A | 03-05-2018 |
| | | | | US | 2018213242 | A1 | 26-07-2018 |
| | | | | WO | 2017038800 | A1 | 09-03-2017 |
| US 2016234500 | A1 | | 11-08-2016 | CN | 105765980 | A | 13-07-2016 |
| | | | | EP | 3073740 | A1 | 28-09-2016 |
| | | | | JP | 6565679 | B2 | 28-08-2019 |
| | | | | JP | WO2015076277 | A1 | 16-03-2017 |
| | | | | US | 2016234500 | A1 | 11-08-2016 |
| | | | | WO | 2015076277 | A1 | 28-05-2015 |

EPO FORM P0459

For more details about this annex : see Official Journal of the European Patent Office, No. 12/82